# EUROPEAN PATENT SPECIFICATION

(11) **EP 4 359 290 B1**
(45) Date of publication and mention of the grant of the patent: **23.04.2025**
(21) Application number: 22733168.3
(22) Date of filing: 16.06.2022
(51) Int. Cl.: B62D 35/02, B62D 37/02

(54) **VEHICLE SKIRT**
FAHRZEUGSCHÜRZE
JUPE DE VÉHICULE

(30) Priority: 22.06.2021 GB 202108916
(43) Date of publication of application: 01.05.2024
(73) Proprietor: MCMURTRY AUTOMOTIVE LIMITED, Vernals Lane Wotton-under-Edge Gloucestershire GL12 7PJ (GB)
(72) Inventor: SCHOLZ, George, Lane Wotton-under-Edge Gloucestershire GL12 7PJ (GB)
(74) Representative: Mewburn Ellis LLP
(86) International application number: PCT/EP2022/066492
(87) International publication number: WO 2022/268646

(56) References cited:
- DE-U1- 202019 103 417
- US-A- 3 628 625
- US-B1- 6 554 241

## Description

### FIELD OF THE INVENTION

The present invention relates to a skirt for an underside of a vehicle. The skirt may serve to guide and/or restrict air flow under the vehicle. The skirt includes an actuation mechanism for controlling a height of a rim of the skirt above a ground surface on which the vehicle is disposed.

### BACKGROUND

One technique for improving a vehicle's grip (or traction) on a ground surface on which it is driving, such as a road, is to generate a downforce which acts on the vehicle and causes the vehicle to be pressed towards the ground surface. Such a downforce may increase tyre adhesion with the ground surface, which may enable the vehicle to travel around bends at greater speeds without losing traction. This may also enable the tyres to transmit greater longitudinal forces to the ground, which may improve acceleration and deceleration of the vehicle.

Typically, a downforce may be generated using aerodynamic characteristics of the vehicle. The vehicle may include one or more surfaces which are configured to generate a downforce when air flows over those surfaces as the vehicle moves. As an example, the vehicle may include an aerofoil (or wing) which is configured to generate a downforce that presses the vehicle towards the ground surface as the vehicle drives over the ground surface. The aerofoil may function based on the same principles as an aircraft wing, except that the aerofoil is arranged to generate a negative lift, i.e. a force directed towards the ground surface.

Another method for generating a downforce that acts on a vehicle is to use a downforce system which is configured to create a low-pressure region underneath the vehicle. For example, the downforce system may include a fan which is arranged to remove air from a region underneath the vehicle, to thereby create a low-pressure region underneath the vehicle. The low pressure region may be defined at least in part by a skirt which is located underneath the vehicle. As a result of the low pressure region underneath the vehicle, a downforce may be generated that provides an increased grip of the vehicle on the ground surface.

US3628625A discloses a vehicle traction-increasing apparatus for creating sub-ambient pressure beneath the vehicle to place a load on the vehicle and increase traction between wheels of the vehicle and the road surface. DE202019103417U1 discloses a vehicle having a system for increasing traction of the wheels using a vacuum generator for generating a low pressure in bellows under the vehicle.

### SUMMARY OF THE INVENTION

At its most general, the present invention provides a skirt for an underside of a vehicle, the skirt including an actuation mechanism for controlling a height of a rim of the skirt over a ground surface on which the vehicle is disposed. In this manner, the actuation mechanism can be used to control the height of the rim over the ground surface. This may serve, for example, to raise the rim away from the ground surface when the skirt is not in use. Controlling the height of the rim may also serve to control an air flow between the rim and the ground surface, e.g. in order to adjust an aerodynamic profile of the underside of the vehicle.

The actuation mechanism includes an actuator configured to cause motion along a first axis, and a converting mechanism that converts the motion along the first axis into a change of height of the rim above the ground surface. The first axis is substantially parallel to an upper surface of the skirt, such that it may be substantially horizontal in use. Thus, the converting mechanism may convert a substantially horizontal motion caused by the actuator into a substantially vertical motion of the rim. Due to the use of the converting mechanism, the actuator itself need not extend towards the ground surface, such that it can be mounted substantially horizontally. As a result, a vertical height taken up by the actuator may be minimised, e.g. compared to a case where the actuator is oriented vertically. In particular, the actuator may be mounted such that its vertical height corresponds to its smallest dimension (e.g. its width), with the actuator being configured to extend and retract along the first axis (e.g. horizontally). Accordingly, the vertical height of the actuator may remain unchanged regardless of whether it is in an extended or retracted state.

The horizontal orientation of the actuator may facilitate integrating the skirt with an underside of a vehicle, as a total height taken up by the skirt may be minimised. As such, the skirt of the invention may be compatible with a wider range of vehicle dimensions. Additionally, the reduced vertical height of the actuator may increase the maximum height that the rim can be lifted away from the ground surface. In other words, a range of vertical motion of the rim relative to the ground surface may be increased due the actuator's horizontal orientation. This may facilitate lifting the rim of the skirt away from the ground surface when the skirt is not in use, e.g. so that the skirt can be stowed in the underside of the vehicle. In contrast, in cases where the actuator is oriented vertically, the maximum height that the rim can be lifted away from the ground surface may be limited by the length of the actuator when it is in a retracted state, which may prevent the rim from being fully retracted towards the underside of the vehicle.

According to a first aspect of the invention, there is provided a skirt as set out in claim 1.

The skirt of the invention may be used as part of a downforce system, e.g. to define a low pressure region under the vehicle, as discussed in more detail below. However, the skirt need not necessarily form part of a downforce system, and other uses of the skirt are contemplated. For example, the skirt may be configured to guide an air flow underneath the vehicle (e.g. by defining one or more channels under the vehicle) or to provide some other desired aerodynamic effect under the vehicle. In some embodiments, the skirt may be configured as an air dam, an air splitter, or a diffuser for use under a vehicle.

The skirt comprises an upper surface, which is configured to be disposed on an underside of the vehicle. For example, the upper surface may be mountable on an underside of the vehicle. Alternatively, the upper surface may be provided by a part of the underside of the vehicle, i.e. the upper surface of the skirt may correspond to part of the underside of the vehicle. The upper surface may be defined by a plate, e.g. which is mountable on the underside of the vehicle, or which is provided on an underside of the vehicle.

Herein, an underside of a vehicle may refer to an undercarriage of the vehicle. The underside of the vehicle may be a lower part of a chassis of the vehicle which faces towards the ground surface. Thus, in use (i.e. when the skirt is disposed on an underside of a vehicle), the upper surface of the skirt may face towards the ground surface.

The skirt further includes a barrier that is configured to extend downwards from the upper surface. Thus, in use, the barrier may extend downwards from the upper surface towards the ground surface. The barrier may be configured to block or restrict an air flow across the barrier. In this manner, the barrier may serve to restrict and/or guide an air flow underneath the vehicle. Thus, the barrier may comprise any suitable piece(s) of material for blocking, restricting and/or guiding air flow under the vehicle. The barrier may comprise a material that is substantially impermeable to air flow. An upper end of the barrier may be secured to the upper surface, e.g. so that the barrier may hang from the upper surface. Alternatively, the upper end of the barrier may be secured to another part of the vehicle (e.g. located above the upper surface of the skirt), so that it extends downwards past the upper surface.

A rim is disposed at the lower end of the barrier. Thus, the barrier may extend between the upper surface of the skirt at its upper end and the rim at is lower end. The rim may correspond to a part of the barrier, e.g. the rim may correspond to a lower edge of the barrier. Alternatively, the rim may be a sperate part which is connected to the lower end of the barrier. In use, the rim may be the part of the skirt which is closest to the ground surface. The rim may extend along all or part of the lower end of the barrier.

In some cases the rim may be configured to contact the ground surface. For example, the rim may be configured to form an at least partial seal with the ground surface. In other words, the rim may be brought into contact with the ground surface, in order to restrict an air flow between the rim and the ground surface. This may reduce an air flow across the barrier, which may increase an effectiveness of the skirt. In particular, by forming an at least partial seal with the ground surface, the skirt may more effectively restrict and/or guide air flow under the vehicle.

The rim may include a sealing element configured to contact the ground surface to form the at least partial seal with the ground surface. In this manner, the at least partial seal may be formed by direct contact between the sealing element and the ground surface. This may result in a high quality seal between the rim and the ground surface, such that air leakage across the barrier may be minimised. Various types of sealing element may be used. For example, the sealing element may comprise an abrasion-resistant material, in order to minimise wear produced by friction between the sealing element and the ground surface. Examples of suitable materials include toughened ceramics, ceramic embedded plastic, composite rope (e.g. including Kevlar), polymer materials, and composite materials. Another possible type of sealing element is a brush seal. Use of a brush seal may minimise friction between the sealing element and the ground surface, which may reduce drag.

The rim may include a flexible material. This may enable the rim to flex in response to variations (e.g. unevenness) in the ground surface, so that the at least partial seal between the rim and the ground surface may be maintained. For example, the rim may be made of one or more of fibreglass, aluminium, and carbon fibre. A stiffness of the material of the rim may be tailored to facilitate maintaining contact with the ground.

The barrier is configured to allow relative movement between the rim and the upper surface. In other words, the barrier does not rigidly fix the rim relative to the upper surface, such that some relative movement between the rim and the upper surface is possible. In particular, the rim can be moved relative to the upper surface along the second axis, i.e. the rim can be moved towards and away from the upper surface. Thus, the barrier may be configured as an extendable (or flexible) coupling between upper surface and the rim, to enable movement of the rim along the second axis relative to the upper surface.

As an example, the barrier may comprise a flexible or supple material, such that the barrier may deform (e.g. bend, flex or stretch) in response to relative movement between the rim and the upper surface. For instance, the flexible material may comprise a textile material (e.g. Nylon), rubber and/or a suitable composite material. In some cases, the barrier may be in the form of flexible bellows. However, the barrier need not necessarily include a flexible material. For example, the barrier may comprise a telescopic coupling, e.g. made of two or more telescopic sections, which are movable relative to one another so as to enable relative movement between the rim and the upper surface.

Where the barrier comprises a flexible material, the rim may have a greater rigidity than the barrier. Thus, the rim may act as a relatively rigid structure at the lower end of the barrier, which may serve to maintain a shape of the barrier.

The actuation mechanism serves to control a height of the rim above the ground surface. Thus, the actuation mechanism may control a distance between the upper surface and the rim. In this manner, the actuation mechanism may be used to lower the rim towards the ground surface and raise the rim away from the ground surface. For example, the rim may be lifted away from the ground surface when the skirt is not in use, and the rim may be lowered toward the ground surface when the skirt is in use. Where the rim is configured to form an at least partial seal with the ground surface, the rim may be lowered into contact with the ground surface.

The actuator is configured to cause a motion along a first axis which is in a first plane substantially parallel to the upper surface of the skirt. Thus, in use, the first plane may be substantially parallel to the ground surface (e.g. horizontal). The actuator may comprise any suitable device for causing motion along an axis. For example, the actuator may comprise a linear actuator. In other cases, a non-linear actuator (e.g. a rotary actuator) may be combined with a suitable mechanism for converting an output of the actuator into the desired linear motion along the first axis. The actuator may be operable to cause the motion along the first axis. The motion along the first axis may be relative to the upper surface of the skirt.

The actuator may have an extended state and a retracted state, with the actuator being configured to extend and retract along the first axis. In other words, the motion along the first axis may be caused by movement of the actuator between its extended and retracted states. The actuator is configured to cause motion of a movable element along the first axis. For example, the movable element may be connected to the actuator such that movement of the actuator between its extended and retracted states causes motion of the movable element along the first axis.

The converting mechanism serves to convert the motion caused by the actuator along the first axis, into a motion of the rim along the second axis. The second axis is substantially perpendicular to the first plane and extends towards the ground surface. Thus, motion of the rim along the second axis corresponds to motion of the rim towards or away from the ground surface. In this manner, the height of the rim above the ground surface may be controlled by operating the actuator. Motion of the rim along the second axis may correspond to motion of the rim along a linear path. However, in some cases, motion of the rim along the second axis may correspond to motion of the rim along a non-linear path, e.g. along a curved path.

The converting mechanism may comprise any suitable mechanism for converting motion along the first axis into motion along the second axis. The converting mechanism is connected between the actuator and the rim, such that the converting mechanism causes motion of the rim along the second axis in response to the motion along the first axis. The converting mechanism may be either directly or indirectly connected between the actuator and the rim. A first end of the converting mechanism is connected to the movable element and a second end of the converting mechanism is connected to the rim. The converting mechanism may be arranged such that motion caused by the actuator in a first direction along the first axis causes motion of the rim in a first direction along the second axis, whilst motion caused by the actuator in a second (opposite) direction along the first axis causes motion of the rim in a second (opposite) direction along the second axis. Thus, the rim may be raised and lowered along the second axis, in response to the motion along the first axis caused by the actuator.

In some cases, the barrier may be configured to define at least in part a region over the ground surface. For example, this may be the case where the skirt is used as part of a downforce system, with the skirt being used to define a low pressure region under the vehicle. In such a case, the barrier may be disposed around (e.g. partially enclose) a region over the ground surface under the vehicle. Thus, the barrier may extend along at least part of a perimeter of the region over the ground surface. In use, the skirt may be disposed over the ground surface on which the vehicle is disposed, such that together the upper surface of the skirt, the barrier, the rim and the ground surface define a region or volume. Then, air may be evacuated from the region, in order to generate a low pressure under the vehicle. The region may be located on an inside of the barrier, whilst an outside of the barrier may face outwards, e.g. the outside of the barrier may be in contact with the atmosphere outside the vehicle.

The barrier may form a closed shape, e.g. so that it extends around a perimeter of a region under the vehicle. For example, the barrier may be in the form of a loop or any other suitable closed shape, such as an oval or a pointed oval (e.g. an oval whose ends are pointed). The rim may then have a corresponding closed shape, so that it extends around the perimeter of the region. However, the barrier need not necessarily form a closed shape. For example, the barrier may be open at one end so that it only defines a portion of the perimeter of the region (the rim may then have a corresponding open shape).

The actuation mechanism may further be configured to apply a force to the rim to press the rim towards the ground surface. Thus, in addition to moving the rim relative to the ground surface, the actuation mechanism may also apply a force to the rim to press the rim towards the ground surface. In other words, the actuation mechanism may exert a downwards force on the rim that presses the rim towards the ground surface. Exerting such a downwards force on the rim may serve to ensure that the rim remains in close proximity (or contact) with the ground surface, such that an air flow between the rim and the ground surface may be kept substantially constant. In particular, the force on the rim may avoid the rim being suddenly knocked away from the ground surface, e.g. due to an impact with the ground surface, which could result in a sudden increase in air flow between the rim and the ground surface. As a result, an overall performance of the skirt may be improved.

The actuator may be configured to generate a force along the first axis and, in response to the force along the first axis, the converting mechanism may be configured to exert a force on the rim along the second axis pressing the rim towards the ground surface. Thus, the converting mechanism may transmit the force generated by the actuator to the rim, to press the rim towards the ground surface. Any suitable type of actuator, which is configured to generate a force may be used.

In cases where the rim is configured to form an at least partial seal with the ground surface, the actuation mechanism may be configured to apply a force to the rim to press the rim against the ground surface. Pressing the rim against the ground surface may serve to minimise an air flow between the rim and the ground surface, thus improving a quality of the at least partial seal.

The actuator may be operable to vary the force applied to the rim. This may enable the force applied to the rim to be adapted to current driving conditions. Varying the downwards force applied to the rim may serve to control an air flow (or leak) between the rim and the ground surface. As a result, an aerodynamic effect produced by the skirt may be varied. For example, where the rim is configured to form an at least partial seal with the ground surface, varying the force on the rim may vary a strength of the at least partial seal between the rim and the ground surface. Increasing the force on the rim may increase a strength of the at least partial seal (thus reducing air flow between the rim and the ground surface), whilst also increasing friction between the rim and the ground surface, which may provide an increased drag. On the other hand, reducing the force on the rim may reduce a strength of the at least partial seal (thus increasing air flow between the rim and the ground surface), whilst also reducing friction between the rim and the ground surface, which may provide a reduced drag. Thus, it may be possible to adjust a trade-off between the strength of the at least partial seal and drag. Any suitable type of actuator, which is configured to generate a controllable force may be used.

The actuator may be operable to set the force applied to the rim to one of a first force and a second force, wherein the first force has a greater magnitude than the second force. Thus, the force applied to the rim may be set to at least two different magnitudes. The first force having a greater magnitude may result in a reduced air flow between the rim and the ground surface, as well as an increased drag, whilst the second force having the smaller magnitude may result in an increased air flow between the rim and the ground surface, as well as a reduced drag. The magnitudes of the two forces may be predetermined, e.g. they may be set as part of the configuration of the actuation mechanism. For example, the actuator may have a first state which corresponds to application of the first force on the rim, and a second state which corresponds to application of the second force on the rim. Configuring the actuation mechanism in this manner may enable a user to easily and rapidly switch between the two forces, to suit the current driving conditions. In some cases, the actuator may be operable to set the force applied to the rim to one of more than two forces. Thus, the force applied to the rim may be set to one of multiple discrete predetermined values.

Additionally or alternatively, the actuator may be operable to continuously vary the force applied to the rim. In other words, the actuator may be operable to set the force applied to the rim to a force having a magnitude between a minimum value (e.g. 0 N) and a maximum value. This may enable fine adjustment of the force applied to the rim, which may provide fine tuning of the air flow between the rim and the ground surface.

The actuator may comprise a fluid-filled actuator. A fluid-filled actuator may facilitate continuous and accurate control of the height of the rim above the ground surface. Moreover, a fluid-filled actuator may enable application and control of a force on the rim, as discussed above. Herein, a fluid-filled actuator may refer to an actuator where one or more fluids (e.g. liquid or gas) are used to operate the actuator. A fluid-filled actuator may comprise a cylinder in which a piston is located, such that a fluid can be introduced into the cylinder to generate a pressure differential across the piston and cause the piston to move. Any suitable type of fluid-filled actuator may be used. Advantageously, a fluid-filled actuator may act as a spring when the rim is deflected away from the ground surface (e.g. due to a bump in the ground surface). In this manner, the fluid-filled actuator may be capable of absorbing impacts between the rim and the ground surface, thus reducing a risk of damage to the rim and the actuation mechanism. In contrast, other types of actuators (e.g. electrical actuators) may be more susceptible to damage from impacts between the rim and the ground surface, due to their greater rigidity. Thus, using a fluid-filled actuator may enable the skirt to be used on a greater variety of roads (e.g. as the roads may not need to be perfectly smooth).

As an example, the fluid-filled actuator may comprise a pneumatic actuator (e.g. a pneumatic cylinder). A pneumatic actuator may provide a convenient solution for controlling the height of the rim, as well as the force applied to the rim, as a pneumatic actuator can be controlled using a relatively simple and lightweight pneumatic circuit. The pneumatic actuator may be controlled by means of a valve located between a pressurised gas supply and the pneumatic actuator.

As another example, the fluid-filled actuator may comprise a hydraulic actuator (e.g. a hydraulic cylinder). A hydraulic actuator may enable control of the height of the rim, as well as the force applied to the rim. However, use of a hydraulic actuator may require a pump, which may increase the total mass of the skirt compared to a case where a pneumatic actuator is used. Also, in contrast to a pneumatic actuator where the gas may be vented to atmosphere, a working fluid of the hydraulic cylinder may need to be returned to a reservoir, such that the hydraulic circuit may be more complex than the pneumatic circuit mentioned above.

It should be noted that types of actuator other than fluid-filled actuators may be used for the actuator. For example, the actuator may comprise an electric actuator, e.g. such as an electric motor.

In embodiments where the barrier is configured to define at least in part a region over the ground surface on which the vehicle is disposed, the actuation mechanism may be disposed inside the region defined at least in part by the barrier. Thus, the barrier may be disposed around the actuation mechanism, such that, in use, the barrier guides air flow under the vehicle around the actuation mechanism. As a result, air flow under the vehicle may not be obstructed by the actuation mechanism, such that drag caused by the skirt may be reduced. This may improve air flow along parts of the underside of the vehicle located around the barrier, which may generate supplementary downforce. Additionally, locating the actuation mechanism inside the region may serve to make the skirt more compact.

The barrier may comprise a first section disposed on a first side of a centreline of the skirt, and a second section disposed on a second side of the centreline, the centreline being a line that is centred about a width of the upper surface of the skirt; and a first section of the rim may be disposed at a lower end of the first section of the barrier, and a second section of the rim may be disposed at a lower end of the second section of the barrier. Thus, the barrier and rim may comprise sections disposed on either side of the centreline. For example, the first sections of the barrier and rim may be located on a left-hand side of the centreline, and the second sections of the barrier and rim may be located on a right-hand side of the centreline. Where the barrier forms a closed shape, or a shape that is open at one end, the first and second sections of the barrier may be connected together, e.g. the first and second sections of the barrier may join together at the centreline (and similarly for the first and second sections of the rim). In other cases, the first and second sections of the barrier may be separate (and similarly for the first and second sections of the rim).

The actuation mechanism may be connected to the first and second sections of the rim, so that the actuation mechanism can control the height of both sections of the rim above the ground surface.

The width of the upper surface may correspond to a width in a lateral direction of the skirt, such that the centreline extends in a longitudinal direction of the skirt. When the skirt is disposed on an underside of the vehicle, the centreline of the skirt may correspond to (i.e. be aligned with) a centreline of the vehicle, such that the width of the skirt may be centred about a width of the vehicle.

The actuation mechanism may be located at the centreline of the skirt. In other words, the actuation mechanism may be centred relative to the width of the upper surface of the skirt. For example, the actuation mechanism may be mounted on the upper surface, such that it is centred about the width of the upper surface. In this manner, the actuation mechanism may be located between the first and second sections of the barrier and the rim. This may facilitate connecting the actuation mechanism to both the first and second sections of the rim. In particular, this may facilitate uniformly (i.e. evenly) controlling the height of the first and second sections of the rim above the ground surface. Additionally, this may serve to locate a centre of mass of the skirt at the centreline, which may improve a balance of the skirt.

The rim may comprise a connection portion that extends between the first section of the rim and the second section of the rim, such that the connection portion crosses the centreline of the skirt. Thus, the connection portion of the rim may act as a brace or beam which connects the first and second portions of the rim together. This may serve to maintain a desired spacing between the first and second portions of the rim, which may serve to maintain a desired shape of the barrier. In particular, the first and second portions of the rim, together with the connection portion may provide a frame which serves to hold a shape of the barrier. This may be particularly beneficial where the barrier is used to define at least in part a region over the ground surface, as the frame provided by the rim may ensure that the barrier keeps the desired shape.

Both the first and second sections of the rim may be configured to contact the ground surface, e.g. to form an at least partial seal with the ground surface. For example, the first and second sections of the rim may each comprise a sealing element, as discussed above. However, the connection portion may be configured to be spaced apart from the ground surface when the first and second sections of the rim contact the ground surface. In other words, the connection portion may be arranged such that, when the first and second sections of the rim contact the ground surface, there is a gap between the connection portion and the ground surface. This may reduce a drag caused by friction between the rim and the ground surface. No sealing element may be provided on the connection portion of the rim.

The converting mechanism may be connected to the connection portion of the rim. By connecting the converting mechanism to the connection portion of the rim, the converting mechanism can cause simultaneous motion of both the first and second portions of the rim along the second axis. Thus, only a single connection to the converting mechanism may be needed to enable control of the height of the first and second sections of the rim. This may also serve to ensure that the height of the first and second sections of the rim above the ground surface is controlled uniformly, i.e. they are moved together so that both sections of the rim have a same height above the ground surface. Where the actuation mechanism is further configured to apply a force to press the rim towards the ground surface, this may enable a uniform application of force to both the first and second sections of the rim. As an example, the converting mechanism may be connected to a middle point of the connection portion, i.e. to a point that is vertically aligned with the centreline of the skirt.

The actuation mechanism may comprise two or more actuation mechanisms, each of the two or more actuation mechanisms comprising a respective actuator for causing a respective motion along the first axis, and a respective converting mechanism connected between the respective actuator and the rim for converting the respective motion along the first axis into a respective motion of the rim along the second axis. Thus, each of the two or more actuation mechanisms may be configured like the actuation mechanism discussed above, and may include any of the features of the actuation mechanism discussed above. The two or more actuation mechanisms may work together in order to control the height of the rim above the ground surface. Using two or more actuation mechanisms in this manner may facilitate lifting and lowering of the rim, particularly where the rim is large. This may also facilitate keeping the rim level (e.g. horizontal) as it is moved along the second axis, as each of the two or more actuation mechanisms may be connected to a different point on the rim. For example, a first one of the two or more actuation mechanisms may be connected to a point towards a front of the rim, and a second one of the two ore more actuation mechanisms may be connected to a point towards a rear of the rim.

In some cases, the two or more actuation mechanisms may be controlled independently, e.g. so that different parts of the rim may be located at different heights over the ground surface. This may enable the rim to be controllably tilted (e.g. relative to the ground surface), e.g. in order to achieve a desired aerodynamic effect.

Additionally, each of the two or more actuation mechanisms may be configured to apply a force to the rim to press the rim towards the ground surface, as discussed above. Using multiple actuation mechanisms in this manner may enable a more uniform application of force along the rim, e.g. so that an at least partial seal with the ground surface may be reliably maintained along the entire rim. Where the two or more actuation mechanisms can be controlled independently, this may enable different forces to be applied to different parts of the rim. For example, the two or more actuators may be controlled such that a greater force is applied to the front of the rim, whilst a smaller force is applied to a rear of the rim. This may serve to ensure that the front of the rim remains in contact with the ground surface, whilst reducing a total drag caused by the rim on the ground surface (due to smaller force on the rear of the rim).

The two or more actuation mechanisms may be spaced apart along the centreline of the skirt. In other words, each of the two or more actuation mechanisms may be located at the centreline of the skirt, and spaced apart from one another in a longitudinal direction. In this manner, the two or more actuation mechanisms may be connected to the rim at different points along a length of the skirt. This may facilitate keeping the rim level as it is lifted and lowered. Additionally, such a longitudinal arrangement of the two or more actuation mechanisms may serve to constrain movement of the rim, to enable accurate control of motion of the rim along the second axis. In particular, the longitudinal arrangement of the two or more actuation mechanisms may serve to restrict (e.g. prevent) longitudinal and lateral motions of the rim relative to the upper surface.

It should be noted that other arrangements of the two or more actuation mechanisms are possible, and that the two or more actuation mechanisms need not necessarily be located at the centreline.

The converting mechanism may comprise a lever that is configured to pivot relative to the upper surface of the skirt in response to the motion along the first axis caused by the actuator, and the rim may be connected to the lever such that pivoting of the lever causes motion of the rim along the second axis. In other words, the lever may serve to convert the motion along the first axis into a change of height of the rim above the ground surface. This may enable effective control of the height of the rim, based on the motion along the first axis caused by the actuator. The lever may be pivotably connected (directly or indirectly) between the actuator and the rim. For example, a first end of the lever may be pivotably connected (directly or indirectly) to the actuator, whilst a second end of the lever may be connected (directly or indirectly) to the rim. Where the actuator causes motion of a movable element along the first axis, as discussed above, the first end of the lever may be pivotably connected to the movable element.

The converting mechanism may further comprise a bar link that is connected between a first pivot joint on the upper surface of the skirt, and a second pivot joint on the lever. The bar link may thus connect the lever to the upper surface of the skirt, which may strengthen the converting mechanism and improve its ability to support the weight of the rim as well as transmit forces to the rim. Additionally, the bar link may act to guide pivoting of the lever relative to upper surface, to enable reliable and accurate control of the height of the rim. In particular, this configuration results in the second axis being perpendicular to the first axis, such that the rim can be moved vertically relative to the ground surface. The second pivot point may be located towards (e.g. at) a middle of a length of the lever.

In some embodiments, the converting mechanism may further comprise a reverse motion linkage configured to, in response to the motion caused by the actuator, cause motion of a movable element in a direction opposite to a direction of the motion caused by the actuator; and the movable element may be connected to the lever, such that the motion of the movable element causes the lever to pivot relative to the upper surface of the skirt. In other words, the actuator may cause motion of a first movable element along the first axis and, in response to motion of the first movable element, the reverse motion linkage may be configured to cause motion of a second movable element in a direction opposite to the motion of the first movable element. The second movable element may then be pivotably connected to the lever, such that the motion of the second movable element causes the lever to pivot relative to the upper surface. Using a reverse motion linkage in this manner may serve to reduce a size of the actuation mechanism. This is because, as the actuator is not directly connected to the lever, the actuator and the lever can be positioned next to one another, such that a total length of the actuation mechanism may be reduced.

Thus, where the converting mechanism comprises a reverse motion linkage, the lever may be mounted adjacent to the actuator in a direction normal to the first axis. In other words, a projection of a length of the lever onto the first plane may lie alongside (or overlap) a length of the actuator and/or of the first axis, the projection being in a direction normal to the first plane. This may reduce a total length of the actuation mechanism, e.g. compared to a case where the actuator and the lever are mounted in series along the first axis.

The converting mechanism may be connected to the rim via a pivot joint. This may enable the rim to pivot relative to the converting mechanism, e.g. so that the rim can remain level as it is raised and lowered relative to the ground surface. This may also avoid concentration of stress in the joint between the converting mechanism and the rim. As an example, the rim may be pivotably connected to the lever discussed above. Where two or more actuation mechanisms are used, each of the two or more actuation mechanisms may be connected to the rim via a respective pivot joint. This may serve to avoid stresses in the system due to any differences between the actuation mechanisms.

Where the converting mechanism comprises a lever that is pivotable relative to the upper surface, the pivot joint may be arranged to allow pivoting of the rim relative to the lever about an axis that is substantially parallel with an axis about which the lever is pivotable relative to the upper surface. This may ensure that the rim can pivot relative to the lever to compensate for pivoting of the lever relative to the upper surface, so that the rim can be kept level as it is raised and lowered.

In some cases, the pivot joint between the converting mechanism and the rim may be a revolute joint. A revolute joint is a pivotable joint which may be configured to constrain pivoting motion between the rim and the converting mechanism to a single axis. This may serve to ensure accurate control of the position of the rim above the ground surface, and may facilitate keeping the rim level as it is moved relative to the ground surface. Such a revolute joint may also serve to restrict (e.g. prevent) unwanted motions of the rim, such as lateral or longitudinal motions.

In other cases, the pivot joint between the converting mechanism and the rim may be a spherical joint. A spherical joint may allow some additional compliance in other axes, as well as allowing rotation in the axis about which the converting mechanism and the rim are pivotable relative to one another. This may avoid concentrations of stresses at the pivot joint between the converting mechanism and the rim, which might otherwise arise if parts in the skirt become misaligned with one another. For example, the converting mechanism and the rim may be configured to be pivotable relative to one another about a primary axis, and the spherical joint may allow (small) pivoting or rotation motions between these parts about other axes. The primary axis may correspond to pitch, in which case the spherical joint may allow yaw and/or roll movement between the converting mechanism and the rim.

The converting mechanism may be connected to the rim via a sliding joint. This may enable some relative movement between the converting mechanism and the rim, to avoid concentration of stress in the joint between the rim and the converting mechanism. For example, the sliding joint may be configured to allow longitudinal or lateral motion of the rim relative to the converting mechanism. Where there is a pivot joint between the rim and the converting mechanism, the pivot joint may further be configured to enable sliding of the rim relative to the converting mechanism. In other words, the connection between the rim and the converting mechanism may comprise both a pivot joint and a sliding joint.

Where there are two or more actuation mechanisms, the converting mechanism of a first one of the actuation mechanisms may be connected to the rim via a first joint comprising a pivot joint and a sliding joint, whilst the converting mechanism of a second one of the actuation mechanisms may be connected to the rim via a second joint comprising a pivot joint and no sliding joint. Thus, only the first joint may enable sliding of the rim. In this manner, the position of the rim may remain fixed relative to the second joint, whilst the sliding joint in the first joint avoids concentration of stresses in the joints. For example, where the two or more actuation mechanisms are spaced apart along the centreline of the skirt, the sliding joint may be configured to allow relative movement between the rim and the first joint along the centreline.

The skirt may further comprise a base disposed on the upper surface of the skirt, with the actuator and converting mechanism being mounted on the base. The base may thus act as a support structure for the actuator and the converting mechanism, which may facilitate mounting them on the upper surface of the skirt. In particular, fixed points of the actuator and converting mechanism may be secured to the base, to ensure effective transmission of force from the actuator to the converting mechanism. The base may be removably mountable on the upper surface of the skirt. This may facilitate installing and removing the actuation mechanism (e.g. for maintenance or repair). Alternatively, the base may be formed as part of the upper surface of the skirt.

The second axis is substantially perpendicular to the first axis. For example, in use, the first axis may be substantially horizontal (e.g. parallel to the ground surface), whilst the second axis may be substantially vertical (e.g. normal to the ground surface).

The actuator may comprise two or more actuators mounted in parallel. Thus, the two or more actuators may be configured to cause the motion along the first axis. For example, the two or more actuators may be configured to cause movement of a movable element along the first axis. Using two or more actuators in parallel may serve to increase a force that can be generated by the actuation mechanism (e.g. for lifting and lowering the rim). This may also improve a reliability of the actuation mechanism, due to the redundancy provided by the use of multiple actuators. In particular, where one of the actuators fails, the remaining actuator(s) may still be operated in order to control the height of the rim above the ground surface. Providing two or more actuators in parallel may also increase a force which the actuation mechanism is capable of applying to the rim to press the rim towards the ground surface.

The actuation mechanism may be configured to move the rim between a deployed position where the rim is at a first height above the ground surface, and a stowed position where the rim is at a second height above the ground surface, the second height being greater than the first height. Thus, when the skirt is not in use, the rim may be placed in the stowed position. This may avoid damage to the rim and the barrier, as well as reduce a drag caused by the skirt, when the skirt is not in use. When the rim is in the stowed position, it may be located at substantially a same height above the ground surface as the upper surface of the skirt. For example, when the rim is in the stowed position, part or all of the rim and barrier may be disposed in a cavity or storage compartment formed in an underside of the vehicle. In some cases, when the rim is in the deployed position, the rim may be arranged to contact the ground surface.

The skirt may comprise one or more latches configured to hold the rim in the stowed position. This may serve to ensure that the rim can be reliably held in the stowed position, and may avoid the rim suddenly dropping towards the ground surface in case of failure of the actuation system. In order to move the rim from the stowed position to the deployed position, the one or more latches may be released to allow motion of the rim along the second axis.

The actuation mechanism may be independent from a suspension system of the vehicle. In other words, the actuation mechanism (e.g. the actuator) may be operated independently from the suspension system of the vehicle. This may facilitate accurate control of the height of the rim above the ground surface, as it may avoid unwanted motion of the rim in response to impulses to the suspension system. In particular, when the upper surface of the skirt is mounted on the underside of the vehicle, the actuation mechanism may directly control a distance between the underside of the vehicle and the rim. The actuation mechanism being independent from the suspension system may mean that the actuation system (i.e. the actuator and converting mechanism) does not form any part of the suspension system of the vehicle, and/or is not functionally connected to the suspension system. The suspension system of the vehicle may be configured to connect a body (or chassis) of the vehicle to wheels of the vehicle, and to enable the body to move vertically relative to the wheels, e.g. when the vehicle drives over a bump in the ground surface.

The skirt may further comprise a controller for controlling the actuation mechanism. In particular, the controller may be configured to control the actuation mechanism, in order to set the height of the rim above the ground surface. The controller may also be configured to control the actuation mechanism to set the force applied to the rim to press the rim towards the ground surface. The controller may comprise any suitable computing device which is configured to control operation of the actuator. For example, where the actuator comprises an electric actuator, the controller may be configured to transmit a control signal to the electric actuator to control operation of the electric actuator. Where the actuator comprises a pneumatic actuator, the controller may be configured to control one or more valves in a pneumatic circuit coupled to the pneumatic actuator. Where the actuator comprises a hydraulic actuator, the controller may be configured to control a pump and/or one or more valves in a hydraulic circuit coupled to the hydraulic actuator.

The controller may comprise a user interface, to enable a user to control operation of the skirt. For example, the user interface may enable a user to select whether the rim is in the deployed or the stowed state, and/or to set a height of the rim above the ground surface. The user interface may also enable the user to select a force to be applied to the rim to press the rim towards the ground surface. In response to receiving an input from a user via the user interface, the controller may be configured to control (i.e. operate) the actuator based on the input received from the user.

Additionally or alternatively, the controller may be configured to automatically control the actuation mechanism. For example, the controller may be configured to control the actuation mechanism based on a current driving condition, so that the height of the rim and the force applied to the rim may be dynamically adjusted based on the current driving condition. Examples of driving conditions which can be used for controlling the actuation system include: vehicle speed, vehicle location (e.g. based on a geo-location of the vehicle), pedal positions (e.g. the rim may be lowered in response to sudden braking), and quality of the ground surface. The skirt and/or vehicle may include one or more sensors which are used as inputs by the controller for controlling the actuation mechanism.

According to a second aspect of the invention, there is provided a vehicle comprising a skirt according to the first aspect of the invention, wherein the upper surface of the skirt is located on an underside of the vehicle.

The vehicle may be any type of vehicle such as a road car or race car. The vehicle may be an electric vehicle, a hybrid vehicle, a vehicle with an internal combustion engine, a fuel-cell-powered vehicle, or any other type of powered vehicle.

The upper surface of the skirt may be mounted to the underside of the vehicle. Alternatively, the upper surface of the skirt may comprise part of the underside of the vehicle. In this manner, the skirt may serve to guide an air flow under the vehicle, in order to provide a desired aerodynamic effect. For example, the skirt may be used to define a region over the ground surface on which the vehicle is disposed, e.g. so that a low pressure region can be generated under the vehicle to create a downforce acting on the vehicle. The skirt may be centred relative to the underside of the vehicle, e.g. a width of the skirt may be centred relative to a width of the underside of the vehicle. This may serve to ensure that the aerodynamic effect created by the skirt acts substantially evenly on the vehicle.

According to a third aspect of the invention, there is provided a downforce system for a vehicle, the downforce system comprising: a skirt according to the first aspect of the invention, wherein the barrier is configured to define at least in part a region over a ground surface on which the vehicle is disposed, and a pressure source configured to generate a pressure differential across the barrier. Any features discussed in relation to the first aspect of the invention may be included in the downforce system of the third aspect of the invention.

Thus, when the skirt is arranged over a ground surface under a vehicle, the barrier may define at least in part a region over the ground surface. Then the pressure source may evacuate air from the region, such that a pressure differential may be generated across the barrier. As a result, a downforce acting on the vehicle may be generated.

The pressure source may include any suitable apparatus for evacuating air from the region under the vehicle. For example, the pressure source may include a fan or similar. The skirt may comprise an air outlet (e.g. formed in the upper surface of the skirt), through which air in the region under the vehicle may be evacuated. Then, the pressure source may be configured to cause air to flow out through the air outlet.

The height of the rim above the ground surface may be controlled in order to control the downforce generated by the downforce system. For example, increasing the height of the rim above the ground surface may increase an air leakage into the region, which in turn may reduce the pressure differential across the barrier and thus reduce the downforce. On the other hand, reducing the height of the rim above the ground surface may reduce air leakage into the region, thus increasing the pressure differential across the barrier and increasing the resulting downforce. Where the rim is configured to form an at least partial seal with the ground surface, the force with which the rim is pressed towards the ground surface may also be controlled to adjust the downforce, as this will affect air leakage into the region.

Herein, a longitudinal direction may refer to a direction along a longitudinal axis of the vehicle or the skirt, i.e. a direction along an axis linking a front of the vehicle to a rear of the vehicle. In other words, the longitudinal direction may correspond to a direction of forward motion of the vehicle. A lateral direction may refer to a direction normal to the longitudinal direction, i.e. a direction along an axis linking a right-hand side to a left-hand side of the vehicle or the skirt.

### BRIEF DESCRIPTION OF THE DRAWINGS

Examples of the invention are discussed below with reference to the accompanying drawings, in which:
Fig. 1 is schematic side view of a vehicle according to an embodiment of the invention;
Fig. 2 is a schematic front cross-sectional view of a skirt according to an embodiment of the invention;
Fig. 3 is a schematic side view of the skirt of Fig. 2;
Fig. 4 is a schematic view of an underside of the skirt of Fig. 2;
Figs. 5a and 5b are schematic side views of an actuation mechanism that is part of a skirt according to an embodiment of the invention;
Figs. 6a and 6b are schematic perspective views of an actuation mechanism that is part of a skirt according to an embodiment of the invention;
Figs. 7a and 7b are schematic side views of the actuation mechanism of Figs. 6a and 6b;
Fig. 8 is a schematic perspective view of a mounting element that is part of a skirt according to an embodiment of the invention; and
Fig. 9 is a schematic perspective view of a mounting element that is part of a skirt according to an embodiment of the invention.

### DETAILED DESCRIPTION; FURTHER OPTIONAL FEATURES

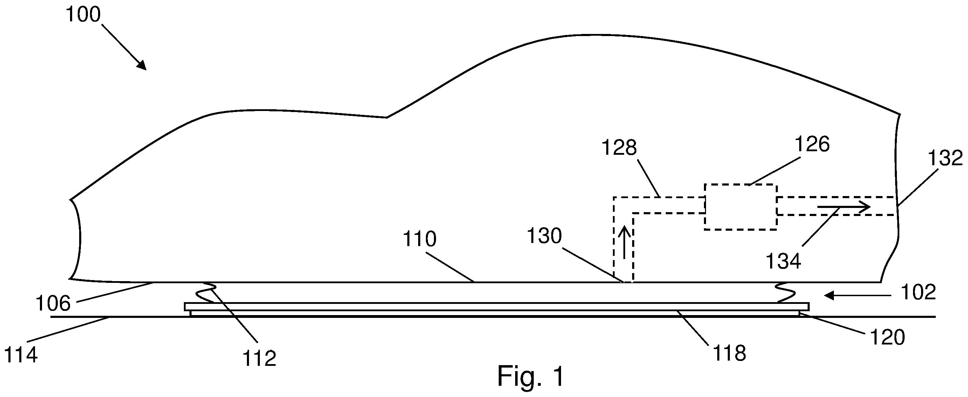

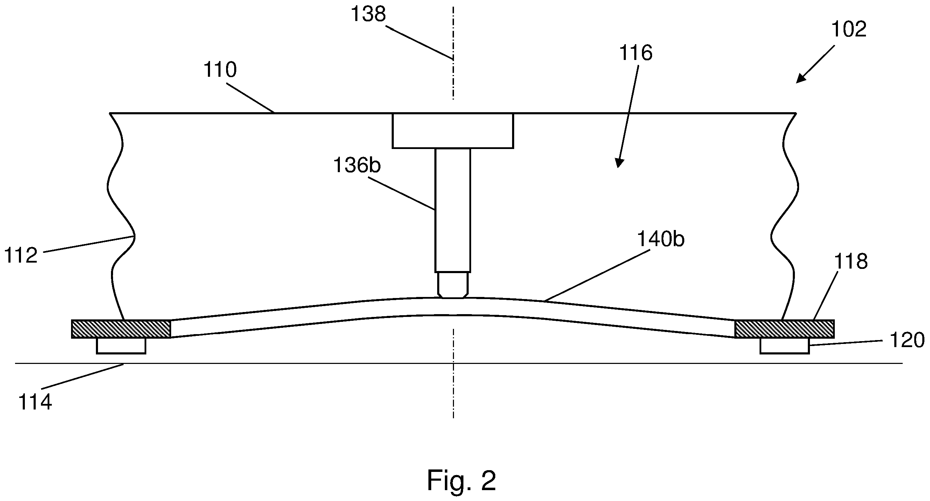

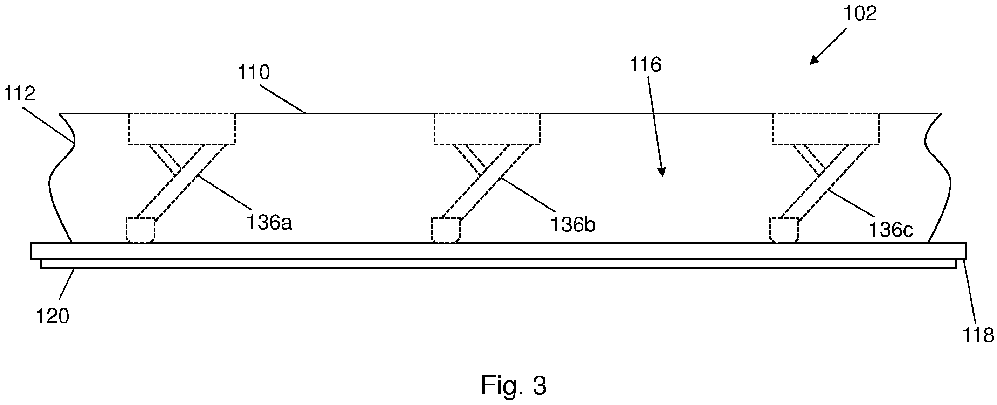

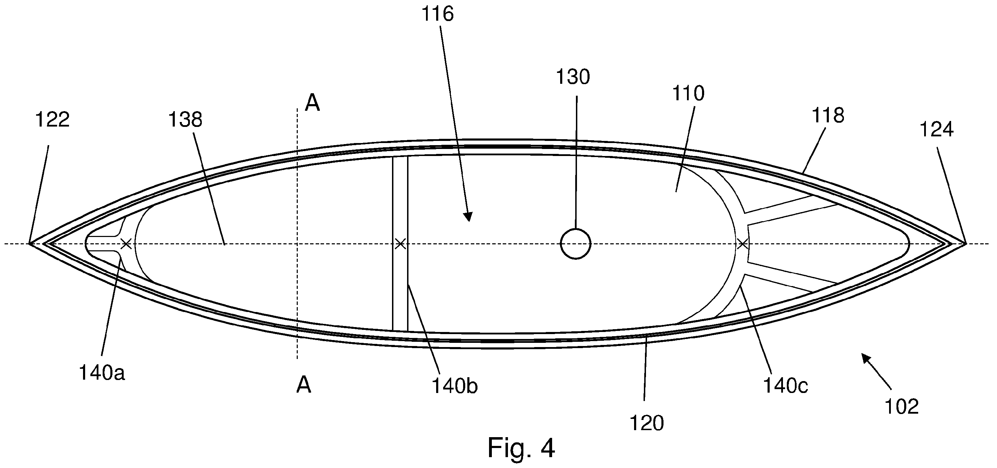

Fig. 1 shows a schematic side view of a vehicle 100 having a skirt 102 according to an embodiment of the invention. In the example shown, the vehicle 100 is a car, however other types of vehicle may also be used. The skirt 102 is mounted on an underside 106 of the vehicle 100, and is used as part of a downforce system of the vehicle 100. The skirt 102 is illustrated in more detail in Figs. 2-4, with Fig. 2 showing a front cross-sectional view of the skirt 102, Fig. 3 showing a side view of the skirt 102, and Fig. 4 showing a view of the skirt 102 from below the skirt 102. Fig. 4 indicates a plane A-A along which the cross-sectional view of Fig. 2 is taken. It should be noted that Figs. 1-4 are not drawn to scale with one another. For illustration purposes, wheels of the vehicle 100 are not depicted in Fig. 1, so that the skirt 102 can be seen clearly.

An upper surface 110 of the skirt 102 is mounted on the underside 106 of the vehicle 100. The upper surface 110 of the skirt 102 may be formed by a plate that is mounted on the underside 106 of the vehicle 100. Alternatively, all or part of the upper surface 110 of the skirt 102 may be formed by a portion of the underside 106 of the vehicle 100. In some cases, the upper surface 110 of the skirt 102 may be arranged within a cavity that is formed in the underside 106 of the vehicle 100. The skirt 102 comprises a barrier (or divider) 112 that is connected at an upper end to the upper surface 110, and extends downwards towards a ground surface (e.g. a road) 114 on which the vehicle 100 is disposed. The barrier 112 forms a closed shape, such that it defines a perimeter of a region 116 over the ground surface 114 under the vehicle 100.

A rim 118 is disposed at a lower end of the barrier 112, i.e. at an end of the barrier 112 closest to the ground surface 114. The rim 118 extends along the lower end of the barrier 112. Thus, the rim 118 forms a closed shape corresponding to the closed shape of the barrier 112, such that the rim 118 is arranged around the perimeter of the region 116 over the ground surface 114 defined by the barrier 112. The rim 118 includes a sealing element in the form of a sealing strip 120, which is provided on a ground facing-surface of the rim 118 such that the sealing strip 120 is arranged to contact the ground surface 114 and slide along the ground surface 114 when the vehicle 100 moves over the ground surface 114. In this manner, the sealing strip 120 may be brought into contact with the ground surface 114 to form an at least partial seal with the ground surface 114, in order to restrict air flow between the rim 118 and the ground surface 114. The sealing strip 120 extends around the closed shape formed by the rim 118, such that the sealing strip 120 extends around the perimeter of the region 116 defined by the barrier 112. As a result, when the sealing strip 120 is contact with the ground surface 114, the sealing strip 120 may act to restrict air flow between the region 116 inside the barrier 112 and the surrounding atmosphere. Thus, when the sealing strip 120 is in contact with the ground surface 114, the region 116 may correspond to a volume that is substantially enclosed between the skirt 102 (which includes the upper surface 110, barrier 112, rim 118 and sealing strip 120) and the ground surface 114. The skirt 102 may therefore act to restrict air flow between the region 116 and the surrounding atmosphere.

A shape of the region 116 defined by the barrier 112 over the ground surface 114 is shown in Fig. 4. As can be seen, the region 116 has a pointed oval shape which is arranged along a longitudinal direction of the vehicle 100, i.e. it is aligned along a direction of forward travel of the vehicle 100. In other words, the region 116 has pointed ends which are arranged near front and rear ends of the vehicle 100, respectively. Thus, the barrier 112 has a first pointed end 122 arranged near the front end of the vehicle 100, and a second pointed end 124 arranged near the rear end of the vehicle 100. Such a pointed oval shape of the region 116 may serve to reduce an aerodynamic drag produced by the skirt 102. Of course, in other examples, the region 116 may have other suitable shapes. For example, the barrier 112 may be arranged to define a region having an oval shape with rounded ends, or the barrier 112 may be arranged to define a region having a rectangular shape or some other shape.

In the example shown, the barrier 112 is formed by a flexible piece of material, such as a textile material or similar. Examples of suitable materials include Nylon, rubber, or thin composite materials. As the barrier 112 is flexible, this enables the rim 118 to move relative to the upper surface 110 (and therefore relative to the underside 106 of the vehicle 100). In particular, the barrier 112 may deform (e.g. flex or bend) to enable relative movement between the upper surface 110 and the rim 118. As a result, when a height of the underside 106 of the vehicle 100 above the ground surface 114 changes, the barrier 112 may flex or bend in response to such change, so that the sealing strip 120 remains in contact with the ground surface 114. This may, for example, facilitate maintaining an at least partial seal between the sealing strip 120 and the ground surface 114 when the height of the underside 106 of the vehicle 100 above the ground surface 114 changes, e.g. due to the vehicle 100 turning or going over a bump in the ground surface 114. However, the barrier 112 need not necessarily be made of a flexible piece of material in order to enable relative movement between the upper surface 110 and the rim 118. For instance, in some cases, the barrier 112 may be in the form of a telescopic coupling between the upper surface 110 and the rim 118. Such a telescopic coupling may include two or more telescopic sections which are movable relative to one another, to enable relative movement between the upper surface 110 and the rim 118.

The downforce system of the vehicle 100 includes a pressure source 126 which is configured to generate a pressure differential across the barrier 112. The pressure source 126 is disposed on an air flow path 128 between an outlet 130 of the skirt 102 and an outlet 132 of the downforce system. The outlet 130 of the skirt 102 is formed as an aperture in the upper surface 110 of the skirt 102 (see Fig. 4), whilst the outlet 132 of the downforce system is formed as an aperture in a body of the vehicle 100 located towards the rear end of the vehicle 100. The pressure source 126 is configured to cause air to flow out of the region 116 inside the barrier 112, and along the air flow path 128, as illustrated by arrows 134 in Fig. 1. As an example, the pressure source 126 may be a fan which is arranged to generate an air flow along the air flow path 128. Note that for illustration purposes, the pressure source 126 and air flow path 128 are shown with dashed lines to indicate that they are disposed within the vehicle 100, i.e. they would not normally be visible from outside the vehicle 100.

When the pressure source 126 is activated, air may flow out of the region 116 via the outlet 130 of the skirt 102, along the air flow path 128, and out of the outlet 132 of the downforce system. Therefore, when the pressure source 126 is activated, air may be evacuated from the region 116, which may result in a drop in pressure in the region 116 compared to atmospheric pressure. Due to the drop in pressure in region 116, a pressure differential may be generated across the barrier 112, due to a difference between the atmospheric pressure surrounding the barrier 112 and the lower pressure in the region 116 inside the barrier 112. Such a pressure differential may result in a downforce acting on the vehicle 100, which may result in an improved grip of the vehicle 100 on the ground surface 114. Contact of the sealing strip 120 with the ground surface 114 may serve to significantly restrict air leakage into the region 116, which may facilitate maintaining a low pressure in the region 116, and thus increasing a downforce that can be achieved with the downforce system of the vehicle 100. The downforce system may further include one or more filters that are arranged along the air flow path 128, in order to capture any dust or debris travelling along the air flow path 128. This may avoid dust or debris from being ejected from the downforce system via the outlet 132.

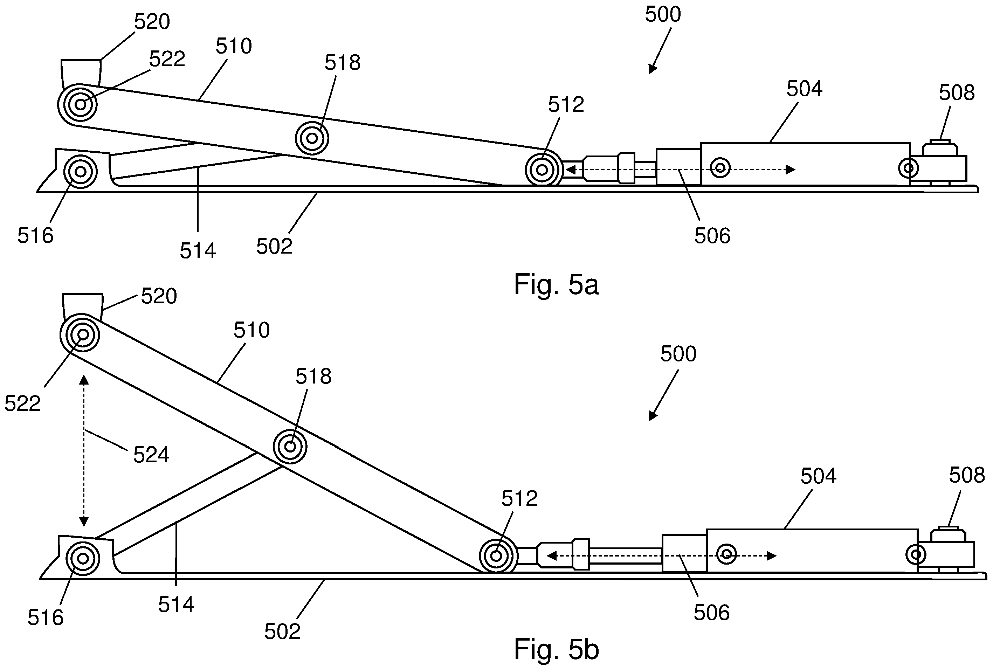

The skirt 102 comprises a set of three actuation mechanisms 136a-c for controlling a height of the rim 118 over the ground surface 114. Each actuation mechanism 136a-c is mounted on the upper surface 110, and connected to the rim 118 to enable the rim 118 to be moved vertically relative to the upper surface 110 (and therefore relative to the ground surface 114). Each actuation mechanism 136a-c comprises an actuator configured to cause a motion along a first axis which lies in a plane parallel to the upper surface 110, and a converting mechanism connected between the actuator and the rim 118. The converting mechanism is configured to convert the motion along the first axis caused by the actuator into a vertical motion of the rim 118, i.e. to change the height of the rim 118 above the ground surface 114. Examples of possible actuation mechanisms are described in more detail below in relation to Figs. 5-7. Note that in Fig. 3 the actuation mechanisms 136a-c are shown in dashed lines, as in practice they would not be visible from the side of the skirt 102, as they are located inside the region 116 defined by the barrier 112.

As shown in Fig. 2, the actuation mechanisms 136a-c are located at a centreline 138 of the skirt 102. In other words, the actuation mechanisms 136a-c are centred about a lateral width of the skirt 102. In this manner, the actuation mechanisms 136a-c are centred about a width of the vehicle 100. Moreover, the actuation mechanisms 136a-c are all located within the region 116 defined by the barrier 112. The oval shape of the region 116 is centred about the centreline 138 of the skirt 102, such that the barrier 112 and the rim 118 include sections extending on either side of the centreline 138. As shown in Fig. 4, the rim includes multiple connection portions 140a-c extending across the centreline, such that they connect sections of the rim 118 located on opposite sides of the centreline 138. The connection portions 140a-c may thus act as a brace or frame for maintaining the oval shape of the rim 118. The connection portions 140a-c do not include the sealing strip 120, and are configured to remain spaced apart from the ground surface 114 when the sealing strip 120 contacts the ground surface 114. In this manner, the connection portions 140a-c do not generate any extra drag on the ground surface 114.

Each of the actuation mechanisms 136a-c is connected to a respective connection portion 140a-c of the rim 118. In particular, a first actuation mechanism 136a is connected to a first connection portion 140a located towards a front of the skirt 102, a second actuation mechanism 136b is connected to a second connection portion 140b located near a middle of the skirt 102, and a third actuation mechanism 136c is connected to a third connection portion 140c located near a rear of the skirt 102. The crosses shown on the connection portions 140a-c in Fig. 4 indicate locations where the actuation mechanisms 136a-c are respectively connected to connection portions 140a-c. As can be seen, the actuation mechanisms 136a-c are connected to the connection portions 140a-c at their middle points, i.e. at points vertically aligned with the centreline 138 of the skirt 102. This may facilitate lifting and lowering the rim 118 evenly, e.g. so that it may be kept level as its height above the ground surface 114 is changed. When adjusting the height of the rim 118 above the ground surface 114, the actuation mechanisms 136a-c may be controlled together in order to ensure that the rim 118 is kept horizontal. However, the actuation mechanisms 136a-c may also be controlled independently, so that the rim can be tilted. For example, the rim may be tilted forwards or backwards, by controlling the first actuation mechanism 136a and the third actuation mechanism 136c to control the relative heights of a front and a rear of the rim 118.

The actuation mechanisms 136a-c are configured to move the rim 118 relative to the upper surface 110 between a deployed position where the sealing strip 120 on the rim 118 is arranged to contact the ground surface 114 (e.g. as in Fig. 1), and a stowed position where the rim 118 and sealing strip 120 are spaced apart from the ground surface 114. In other words, the actuation mechanisms 136a-c may raise and lower the rim 118 between the stowed and deployed positions. In this manner, when the downforce system of the vehicle 100 is not in use, the rim 118 may be raised into the stowed position so that the sealing strip 120 does not contact the ground surface 114. This may serve to protect the rim 118 and sealing strip 120 when the downforce system is not in use. In some cases, a cavity may be formed in the underside 106 of the vehicle 100 to receive the rim 118 when the rim 118 is raised into the stowed position.

In addition to controlling the height of the rim 118 above the ground surface 114, the actuation mechanisms 136a-c may also be configured to apply a force to the rim 118 to press the rim 118 towards the ground surface 114. Such a force pressing the rim 118 towards the ground surface 114 may be referred to as a preload force. Thus, the actuation mechanisms 136a-c can press the sealing strip 120 against the ground surface 114, so that the sealing strip 120 can form a reliable seal with the ground surface 114, thus minimising air leakage between the rim 118 and the ground surface 114. The actuation mechanisms 136a-c may be controllable to vary the preload force applied to the rim 118, in order to vary a strength of the seal between the sealing strip 120 and the ground surface 114. In this manner, the amount of air leakage into the region 116 may be controlled by varying the preload force on the rim 118, which enables adjustment of the pressure differential across the barrier 112 and thus of the generated downforce. Varying the preload force applied to the rim 118 may also serve to vary a drag caused by the sealing strip 120 on the ground surface 114. Thus, the preload force on the rim 118 may be adjusted to vary a trade-off between downforce generated by the downforce system and drag caused by friction between the sealing strip 120 and the ground surface 114.

The actuation mechanisms 136a-c may be controlled such that the preload force is applied substantially uniformly around the rim 118. Alternatively, the actuation mechanisms 136a-c may be controlled independently, so that different preload forces are applied to different parts of the rim 118. For example, the first actuation mechanism 136a may be controlled to apply a higher preload force than the third actuation mechanism 136c. The higher preload force applied by the first actuation mechanism 136a may serve to ensure that the front of the rim 118 is maintained in contact with the ground surface 114, as a higher preload force may typically be required to keep the front of the rim 118 in contact with the ground surface 114. On the other hand, the lower preload force applied by the third actuation mechanism 136c may be enough to maintain the rear of the rim 118 in contact with the ground surface 114, whilst reducing an overall drag caused by the rim 118 (i.e. the sealing strip 120) on the ground surface 114.

In use, the actuation mechanisms 136a-c may be operated to initially lower the rim 118 from the stowed position to the deployed position so that the sealing strip 120 contacts the ground surface 114. Then, optionally, the actuation mechanisms 136a-c may be controlled to apply a preload force on the rim 118 to press the sealing strip 120 against the ground surface. The pressure source 126 may then be operated to evacuate air from the region 116 inside the skirt 102, so as to generate a pressure differential across the barrier 112 resulting in a downforce acting on the vehicle 100. The vehicle 100 may include a controller, e.g. in the form of an on-board computer in the vehicle 100, which is configured to control the downforce system of the vehicle 100. Such a controller may be configured to control the pressure source 126, as well as the actuation mechanisms 136a-c, in order to control generation of a downforce by the downforce system. In particular, the controller may control operation of the actuation mechanisms 136a-c, in order to control the height of the rim 118 above the ground surface 114, as well as the preload force applied to the rim 118.

The vehicle 100 has a suspension system (not shown), which connects wheels of the vehicle to the body of the vehicle, to enable relative movement between the wheels and the body. The suspension system may comprise any suitable arrangement of components for enabling movement of the body relative to the wheels, including components such as springs and/or shock absorbers. The actuation mechanisms 136a-c are independent from the suspension system of the vehicle 100. In particular, they do not form any part of the suspension system, and are not functionally connected to any part of the suspension system. In this manner, the actuation mechanisms 136a-c can be operated independently from the suspension system. Thus, the actuation mechanisms 136a-c enable a distance between the upper surface 110 of the skirt 102 and the rim 118 to be directly controlled by the actuation mechanisms 136a-c, without interference from the suspension system. This may enable accurate control of the height of the rim 118 above the ground surface 114. For example, where the actuation mechanisms 136a-c comprise pneumatic actuators, a pneumatic circuit used for controlling the pneumatic actuators may be independent from (i.e. not connected to) the suspension system. Likewise, where the actuation mechanisms 136a-c comprise hydraulic actuators, a hydraulic circuit used for controlling the hydraulic actuators may be independent from (i.e. not connected to) the suspension system. In examples where the actuation mechanisms 136a-c comprise electric actuators, electric circuitry used for controlling the electric actuators may likewise be independent from (i.e. not connected to) the suspension system.

It should be noted that, although the example shown includes three actuation mechanisms 136a-c, different numbers of actuation mechanisms may be used in different embodiments. For example, some embodiments may include a single actuation mechanism, two actuation mechanisms, or more than three actuation mechanisms. The actuation mechanisms may be connected to the rim at various different locations, e.g. other than those shown in Fig. 4.

Figs. 5a and 5b show schematic side views of an actuation mechanism 500 that may be used as part of a skirt according to an embodiment of the invention. For example, the actuation mechanism 500 may correspond to one of the actuation mechanisms 136a-c of the skirt 102 discussed above. The actuation mechanism 500 comprises a base 502 on which an actuator 504 is mounted. In the example shown, the actuator 504 is a fluid-filled actuator, such as a pneumatic actuator or a hydraulic actuator. However, in other examples, different types of actuators may be used. The actuator 504 is configured to extend and retract along a first axis 506 (indicated by arrows labelled 506 in Figs 5a and 5b). In particular, the actuator 504 is operable to cause it to move between a retracted state (shown in Fig. 5a) and an extended state (shown in Fig. 5b). A length of the actuator 504 in a direction along the first axis 506 is greater when it is in the extended state. A first end of the actuator 504 is fixed to the base 502 via a suitable fastener 508, such as a bolt or screw. The actuator 504 may be operated using a suitable pneumatic or hydraulic circuit.

The actuation mechanism 500 further includes a lever 510 having a first end that is pivotably connected to a second end of the actuator 504 via a pivot joint 512. A bar link 514 is connected between the base 502 and the lever 510. In particular, the bar link 514 is pivotably connected at one end to the base 502 via a first pivot joint 516, and pivotably connected at another end to the lever 510 via a second pivot joint 518. The second pivot joint 518 is located towards a middle of the lever 510. A mounting element 520 is provided at a second end of the lever 510, located opposite to the first end which is pivotably connected to the actuator 504. The mounting element 520 is pivotably connected to the second end of the lever 510 via a pivot joint 522. The mounting element 520 is configured for attachment to a rim of a skirt according to an embodiment of the invention. The mounting element 520 may include any suitable means for attaching it to a rim. As an example, the mounting element 520 may include one or more holes, which can be used for bolting or screwing the rim to the mounting element 520.

As the first end of the actuator 504 is secured to the base 502 (via fastener 508) and the second end of the actuator 504 is pivotably connected to the first end of the lever 510 (via pivot joint 512), when the actuator 504 moves between its extended and retracted states, this causes first end of the lever 510 to move relative to the base 502 along the first axis 506. Due to the bar link 514 being pivotably connected between the base 502 and the lever 510, motion of the first end of the lever 510 along the first axis 506 causes the lever 510 to pivot relative to the base 502. For example, as shown in Fig. 5b, when the actuator 504 is moved to the extended stated, the lever 510 pivots such that its second end (i.e. the end having the mounting element 520) moves away from the base 502. In particular, motion of the first end of the lever 510 along the first axis 506 caused by the actuator 504 results in a motion of the mounting element 520 along a second axis 524 (shown in Fig. 5b). In this manner, the mounting element 520 can be moved away from the base 502 by extending the actuator 504, and the mounting element 520 can be moved towards the base 502 by retracting the actuator 504. The lever 510 and the bar link 514 may therefore act as a converting mechanism, which converts the motion caused by the actuator 504 along the first axis into a motion of the mounting element 520 along the second axis 524. In the example shown, the second axis 524 is substantially perpendicular to the first axis 506.

In use, the base 502 may be mounted on an upper surface of a skirt according to the invention. For example, the base 502 may be mounted on the upper surface 110 of the skirt 102 discussed above. Alternatively, the base 502 may be formed as part of the upper surface of the skirt, and/or it may be provided by part of the underside of the vehicle. Accordingly, the first axis 506 may be substantially parallel to the upper surface of the skirt, and therefore also to the ground surface on which the vehicle is disposed. The mounting element 520 is connectable to the rim of the skirt, e.g. the mounting element 520 may be connected to the rim 118 of the skirt 102. Thus, the actuation mechanism 500 enables movement of the rim of the skirt along the second axis 524, which in used may be oriented vertically. In this manner, the actuation mechanism 500 can be used to control the height of the rim above the ground surface. The pivot joint 522 between the second end of the lever 510 and the mounting element 520 may enable the rim to remain level (e.g. horizontal) as the mounting element 520 is moved along the second axis 524. The retracted state of the actuator 504 shown in Fig. 5a may correspond to a retracted position of the rim, as the mounting element 520 is located close to the base 502, such that the rim may be spaced apart from the ground surface. On the other hand, the extended state of the actuator 504 shown in Fig. 5b may correspond to the deployed position of the rim, as the mounting element 520 is spaced further from the base 502, such that the rim may be close to (or in contact with) the ground surface.

Moreover, the actuator 504 may be configured such that, when it is in a state corresponding to the deployed position of the rim, it is capable of applying a force to the first end of the lever 510 to press the first end of the lever 510 towards the first pivot joint 516. The force applied by the actuator 504 to the first end of the lever 510 may be converted by the lever 510 and the bar link 514 into a force along the second axis 524 which urges the mounting element 520 away from the base 502. In this manner, a force may be applied to a rim connected to the mounting element 520, to press the rim away from the base. Thus, in use, a preload force may be applied to the rim, to press the rim towards the ground surface. The actuator 504 may be controlled, to control the force applied to the first end of the lever 510, and therefore the preload force applied to the rim. In embodiments where the rim is configured to contact the ground surface, the actuator 504 may be configured to apply a force to the first end of the lever 510 to press the first end of the lever 510 towards the first pivot joint 516, when the rim contacts the ground surface. In this manner, the rim may be pressed against the ground surface due to the force applied by the actuator 504. In other embodiments, the rim may be configured to be spaced apart from the ground surface when it is in the deployed position. In such an embodiment, there may be an end stop which is configured to limit lowering of the rim to ensure that there is a gap between the rim and the ground surface when the rim is in the deployed position. When the rim is in the deployed position, the actuator 504 may then apply a force to the first end of the lever 510 to press the first end of the lever 510 towards the first pivot joint 516. The end stop may react the force applied by the actuator 504, so that the rim is pressed towards the ground surface.

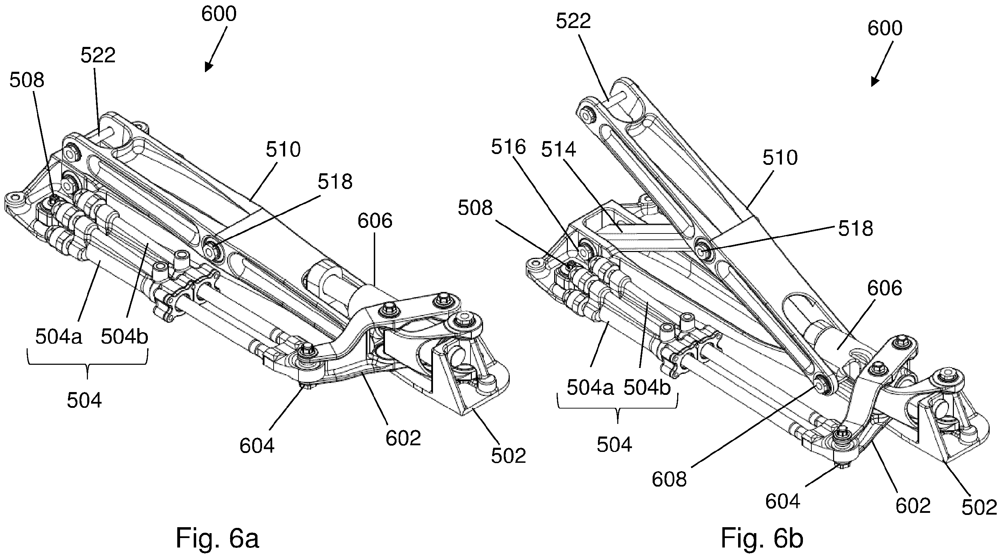

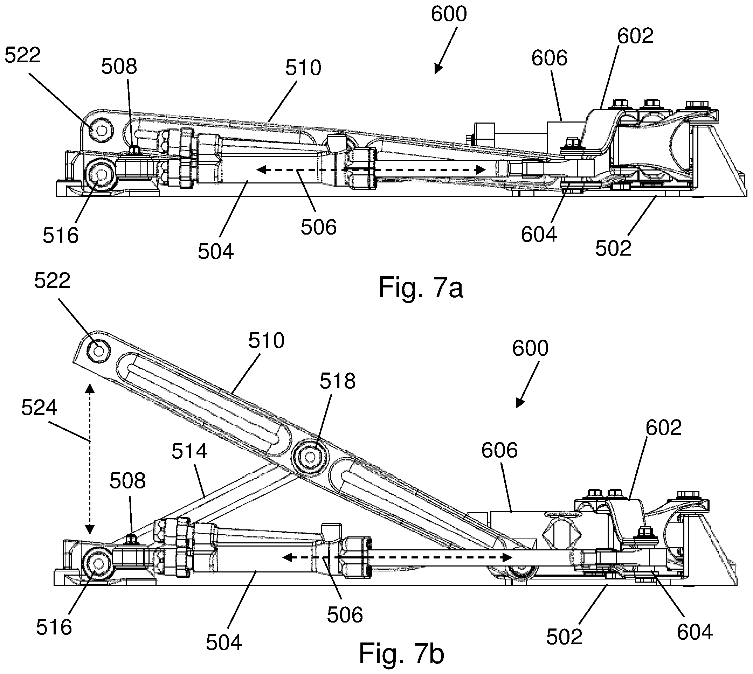

Figs. 6a, 6b, 7a and 7b illustrate another example of an actuation mechanism 600 that can be used as part of a skirt according to an embodiment of the invention. For example, the actuation mechanism 600 may correspond to one of the actuation mechanisms 136a-c of the skirt 102 discussed above. Figs. 6a and 6b show a perspective view of the actuation mechanism 600, whilst Figs. 7a and 7b show a side view of the actuation mechanism 600. The actuation mechanism 600 works in a similar way to the actuation mechanism 500 discussed above. Accordingly, any of the features described above in relation to the actuation mechanism 500 may be shared with the actuation mechanism 600. For convenience, features of the actuation mechanism 600 that correspond to features described above in relation to the actuation mechanism 500 are indicated in Figs. 6a, 6b, 7a and 7b using the same reference numerals as in Figs. 5a and 5b, and are not described again.

Figs. 6a and 7a illustrate the actuation mechanism 600 when the actuator 504 is in the retracted state, whilst Figs. 6b and 7b illustrate the actuation mechanism 600 when the actuator 504 is in the extended state. In contrast to the actuation mechanism 500 described above, the second end of the actuator 504 of the actuation mechanism 600 is not directly connected to the first end of the lever 510. Instead, the actuation mechanism 600 comprises a reverse motion linkage 602 connected between the second end of the actuator 504 and the first end of the lever 510. A first end 604 of the reverse motion linkage 602 is connected to the second end of the actuator 504. In this manner, when the actuator 504 moves between its retracted and extended states, this causes motion of the first end 604 of the reverse motion linkage 602 along the first axis 506. A second end 606 of the reverse motion linkage 602 is connected to the first end of the lever 510 via a pivot joint 608. The reverse motion linkage 602 is a bar linkage which is configured such that motion of the first end 604 along the first axis 506 caused by the actuator 504 results in a motion of the second end 606 in a direction opposite to the motion of the first end 604. Thus, the second end 606 of the reverse motion linkage 602 moves in a direction parallel to the first axis 506, but in a direction opposite to the motion of the first end 604 caused by the actuator 504. Accordingly, when the actuator 504 moves between its retracted and extended states, the first end of the lever 510 is caused to move by the reverse motion linkage 602. The first end of the lever 510 moves in a direction parallel to the first axis 506, and opposite to the motion of the first end 604 of the reverse motion linkage 602 caused by the actuator 504. The reverse motion linkage 602 may include any suitable combination of bar linkages and pivot joints connected between the second end of the actuator 504 and the first end of the lever 510.

Due to the use of the reverse motion linkage 602 in the actuation mechanism 600, the lever 510 and bar link 514 can be mounted such that they are located alongside (i.e. adjacent to) the actuator 504 in a direction normal to the first axis 506. In particular, the first pivot joint 516 is located adjacent to the first end of the actuator 504. As a result a total length of the actuation mechanism 600 is reduced, e.g. compared to the actuation mechanism 500. Indeed, in the actuation mechanism 500, the actuator 504 and the lever 510 are mounted end-to-end (i.e. in series), such that a total length of the actuation mechanism 500 corresponds to a sum of the lengths of the actuator 504 and the lever 510. In contrast, in the actuation mechanism 600, as the actuator 504 and the lever 510 are mounted adjacent to one another, the total length of the actuation mechanism is less than the sum of the lengths of the actuator 504 and the lever 510.

Another difference compared to the actuation mechanism 500 is that the actuator 504 of the actuation mechanism 600 is formed by two actuators 504a, 504b mounted in parallel (e.g. as shown in Figs. 6a and 6b). The two actuators are secured at a first end to the base via the fastener 508. A second end of each actuator is connected to the first end 604 of the reverse motion linkage 602. Each of the two actuators is a fluid-filled actuator, such as a pneumatic actuator or a hydraulic actuator. The two actuators may be operated in unison, such that they act together to cause motion of the first end of the reverse motion linkage 602 along the first axis 506. Using two actuators may increase a force that the actuator 504 is capable of generating, in order to lift and lower the rim, as well as apply a preload force to the rim. This may also improve a reliability of the actuation mechanism 600, as the actuation mechanism 600 may still be able to function in cases where one of the two actuators fails. In other examples, a larger number of actuators mounted in parallel may be used as the actuator 504. Of course, the actuation system 500 may be modified so that its actuator 504 is formed by two or more actuators mounted in parallel.

The actuation mechanism 600 operates in an analogous manner to the actuation mechanism 500 described above. In particular, motion of the first end of the lever 510 caused by the actuator 504 (via the reverse motion linkage 602) results in a pivoting movement of the lever 510 relative to the base 502. Thus, motion caused by the actuator 504 along the first axis 506 is converted into a motion of the second end of the lever 510 along the second axis 524, which is perpendicular to the first axis 506. A mounting element (not shown in Figs. 6a, 6b, 7a and 7b) may be pivotably mounted on the second end of the lever 510, to enable connection to a rim of the skirt. Thus, the actuation mechanism 600 can be used to control a height of the rim above the ground surface, as well as to apply a force to the rim to press the rim towards the ground surface.

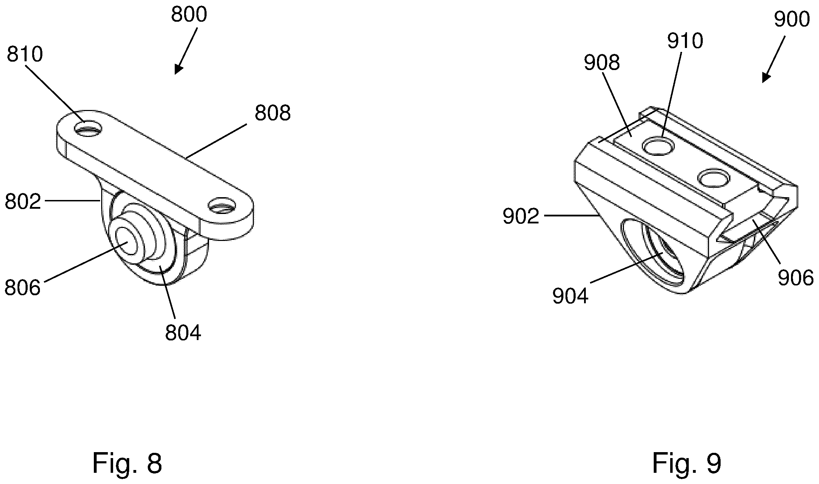

Figs. 8 and 9 show examples of mounting elements that can be used for connecting a rim of a skirt to an actuation mechanism of a skirt according to the invention. Fig. 8 shows a perspective view of a mounting element 800. The mounting element 800 comprises a body 802 in which a pivot joint 804 is rotatably mounted. A rotatable connection between the body 802 and the pivot joint 804 enables the body 802 to be pivoted relative to the pivot joint relative to an axis. More specifically, as shown in Fig. 8, the pivot joint 804 comprises a central through hole 806 extending therethrough, and in which a shaft on the converting mechanism may be received. In use, the shaft may be received in the through hole 806. Then, the body 802 can be pivoted about a longitudinal axis of the shaft, such that the body 802 is pivotable relative to the converting mechanism.

The pivot joint 804 may be a spherical joint, so that pivoting of the body 802 is not restricted to a single axis. In particular, when a shaft is received in the through hole 806, the pivot joint 804 may enable the body 802 to pivot about a longitudinal axis of the shaft, as well as to tilt a small amount relative to the longitudinal axis of the shaft. The pivot joint 804 serves to pivotably connect the mounting element 800 to a converting mechanism of an actuation mechanism. When the pivot joint 804 is connected to the converting mechanism, the body 802 may be pivoted relative to the converting mechanism. As an example, the mounting element 800 may be used as the mounting element 520 in actuation mechanism 500 discussed above. Then, the pivot joint 804 may correspond to the pivot joint 522, such that the pivot joint 804 is connected to the second end of the lever 510. In particular, the pivot joint 804 may be mounted on a shaft located at the second end of the lever 510. As a result of the pivotable connection to the second end of the lever 510, the body 802 can be pivoted relative to the second end of the lever 510.

The body 802 of the mounting element 800 further includes a mounting portion 808, to which a rim of a skirt may be secured. In the example shown, the mounting portion 808 includes a pair of holes 810, which can be used for bolting or screwing the rim to the mounting portion 808. However, in other examples, other means of securing the rim to the mounting portion 808 may be used.

In use, when the mounting element 800 is connected between a converting mechanism (e.g. lever 510) and a rim (e.g. rim 118), the pivot joint 804 enables the rim to pivot relative to the converting mechanism. This may enable the rim to remain level (e.g. horizontal) as it is raised and lowered by the actuation mechanism, as well as avoid a concentration of stress in the connection between the converting mechanism and the rim. For example, in the case of actuation mechanism 500 or 600, the pivotable connection between the lever 510 and the rim ensures that the rim can be kept level as the lever 510 is pivoted relative to the base 502. The mounting element 800 may be arranged such that the axis about which the body 802 is pivotable is substantially parallel to an axis about which the converting mechanism (e.g. lever 510) is pivotable. This may ensure that pivoting enabled by the mounting element 800 can compensate for pivoting of the converting mechanism, so that the rim is not itself pivoted when it is raised or lowered.

Fig. 9 shows a perspective view of a mounting element 900. The mounting element 900 has a similar structure to the mounting element 800 discussed above, in that it has a body 902 in which a pivot joint 904 is rotatably mounted. The body 902 and pivot joint 904 work together in a similar manner to the body 802 and pivot joint 804 discussed above, such that the body 902 is pivotable relative to the pivot joint 904 about an axis, and the pivot joint 904 includes a through hole for mounting it on a shaft. However, the pivot joint 904 may be configured as a revolute joint, rather than as a spherical joint. As a result, the pivot joint 904 may restrict pivoting of the body 902 to a single axis. Additionally, the body 902 comprises a channel (or groove) 906 in which a mounting portion 908 is disposed. The mounting portion 908 is retained within the channel 906, whilst being slidable along a length of the channel 906. Thus, the mounting portion 908 is slidable relative to the body 902. In the example shown, the channel 906 is oriented such that is extends in a direction normal to an axis about which the body 902 is pivotable relative to the pivot joint 904. The mounting portion 908 includes a pair of holes 910, which can be used for bolting or screwing a rim to the mounting portion 908. Of course, in other examples, other means of securing the rim to the mounting portion 908 may be used.

In use, when the mounting element 900 is connected between a converting mechanism (e.g. lever 510) and a rim (e.g. rim 118), the pivot joint 904 enables the rim to pivot relative to the converting mechanism, whilst the slidable mounting portion 908 enables the rim to slide relative to the converting mechanism. Similarly to the discussion above for mounting element 800, the pivoting enabled by mounting element 900 may serve to ensure that the rim can be kept level when it is raised or lowered above the ground surface. The slidable mounting portion 908 further enables the rim to move relative to the converting mechanism along the length of the channel 906 as the height of the rim over the ground surface is changed. In particular, the channel 906 may be arranged to enable sliding of the mounting portion in a direction parallel to the upper surface of the skirt. This may enable a small amount of lateral and/or longitudinal motion (depending on the orientation of the channel 906) of the rim relative to the upper surface. This may serve to avoid a concentration of stress in the connection between the rim and the converting mechanism, e.g. by allowing bends in the rim to relax. The use of such a sliding joint may be particularly beneficial where multiple actuation mechanisms are used, as this may avoid concentration of stresses in the connections between the rim and the actuation mechanisms which might otherwise occur due to variations between the actuation mechanisms.

Where multiple actuation mechanisms are used for controlling the height of the rim above the ground surface, a first one of the actuation mechanisms may be connected to the rim using the mounting element 800, whilst the other actuation mechanisms may be connected to the rim using the mounting element 900. In this manner, the lateral or longitudinal position of a part of the rim connected to the first actuation mechanism may be fixed by means of the mounting element 800. Using the mounting element 900 for connecting other parts of the rim to the other mounting elements may then enable stresses in the rim to relax. For instance, with the example of Fig. 3, the first actuation mechanism 136a may be connected to the first connection portion 140a of the rim 118 using the mounting element 800, whilst the second and third actuation mechanisms 136b-c may be connected to the first and second connection portions 140b-c of the rim 118 using mounting elements corresponding to mounting element 900.

It should be noted that, although the skirt of the invention is discussed above as being used as part of a downforce system, that is just one possible use of the skirt, and many other uses of the skirt are possible. In general, the skirt of the invention may be used in applications where it is desirable to restrict or direct an air flow underneath a vehicle. For instance, a skirt according to the invention may be mounted under a vehicle, in order to channel or guide air flow under the vehicle in a desired manner, e.g. to improve an aerodynamic profile of the vehicle. Thus, the skirt of the invention need not necessarily have the shape shown in Fig. 4 above, and it may have other shapes that are adapted to its desired function. The skirt need not necessarily form a closed shape, but may instead form an open shape. For example, the skirt may be shaped to define one or more channels under the vehicle, in order to guide an air flow under the vehicle.

## Claims

1. A skirt (102) for an underside (106) of a vehicle (100), the skirt comprising:
a barrier (112) configured to extend downwards from an upper surface (110) of the skirt;
a rim (118) disposed at a lower end of the barrier, wherein the barrier is configured to allow relative movement between the rim and the upper surface;
an actuation mechanism (136a, 136b, 136c, 500) for controlling a height of the rim above a ground surface (114) on which the vehicle is disposed, wherein the actuation mechanism comprises:
an actuator (504) configured to cause a motion of a movable element (512) along a first axis (506), the first axis being in a first plane that is substantially parallel to the upper surface of the skirt; and
a converting mechanism configured to convert the motion along the first axis into a motion of the rim along a second axis (524), the second axis being substantially perpendicular to the first plane such that the second axis extends towards the ground surface, wherein a first end of the converting mechanism is connected to the movable element and a second end of the converting mechanism is connected to the rim.

2. A skirt according to claim 1, wherein the actuation mechanism is further configured to apply a force to the rim to press the rim towards the ground surface; and optionally
wherein the actuator is operable to vary the force applied to the rim.

3. A skirt according to claim 2, wherein the actuator is operable to set the force applied to the rim to one of a first force and a second force, wherein the first force has a greater magnitude than the second force.

4. A skirt according to any preceding claim, wherein the actuator comprises a fluid-filled actuator; and optionally
wherein the fluid-filled actuator is a pneumatic actuator.

5. A skirt according to any preceding claim, wherein:
the barrier is configured to define at least in part a region (116) over the ground surface on which the vehicle is disposed; and
the actuation mechanism is disposed inside the region defined at least in part by the barrier.

6. A skirt according to any preceding claim, wherein:
the barrier comprises a first section disposed on a first side of a centreline (138) of the skirt, and a second section disposed on a second side of the centreline, the centreline being a line that is centred about a width of the upper surface of the skirt; and
a first section of the rim is disposed at a lower end of the first section of the barrier, and a second section of the rim is disposed at a lower end of the second section of the barrier; and optionally
wherein the actuation mechanism is located at the centreline of the skirt.

7. A skirt according to claim 6, wherein the rim comprises a connection portion (140a, 140b, 140c) that extends between the first section of the rim and the second section of the rim, such that the connection portion crosses the centreline of the skirt; and optionally
wherein the converting mechanism is connected to the connection portion of the rim.

8. A skirt according to claim 6 or 7, wherein:
the actuation mechanism comprises two or more actuation mechanisms, each of the two or more actuation mechanisms comprising a respective actuator for causing a respective motion along the first axis, and a respective converting mechanism connected between the respective actuator and the rim for converting the respective motion along the first axis into a respective motion of the rim along the second axis; and
the two or more actuation mechanisms are spaced apart along the centreline of the skirt.

9. A skirt according to any preceding claim, wherein the converting mechanism comprises a lever (510) that is configured to pivot relative to the upper surface of the skirt in response to the motion along the first axis caused by the actuator, and wherein the rim is connected to the lever such that pivoting of the lever causes motion of the rim along the second axis; and optionally
wherein the converting mechanism further comprises a bar link (514) that is connected between a first pivot joint (516) on the upper surface of the skirt, and a second pivot joint (518) on the lever.

10. A skirt according to claim 9, wherein:
the converting mechanism further comprises a reverse motion linkage (602) configured to, in response to the motion caused by the actuator, cause motion of a second movable element (606) in a direction opposite to a direction of the motion of the movable element caused by the actuator; and
the second movable element is connected to the lever, such that the motion of the second movable element causes the lever to pivot relative to the upper surface of the skirt; and optionally
wherein the lever is mounted adjacent to the actuator in a direction normal to the first axis.

11. A skirt according to any preceding claim, wherein the converting mechanism is connected to the rim via a pivot joint (522) and/or a sliding joint; and optionally
wherein the pivot joint is a revolute joint or a spherical joint.

12. A skirt according to any preceding claim, further comprising a base (502) disposed on the upper surface of the skirt, wherein the actuator and converting mechanism are mounted on the base; and/or
wherein the actuator comprises two or more actuators mounted in parallel.

13. A skirt according to any preceding claim, wherein the actuation mechanism is configured to move the rim between a deployed position where the rim is at a first height above the ground surface, and a stowed position where the rim is at a second height above the ground surface, the second height being greater than the first height; and/or
wherein the actuation mechanism is independent from a suspension system of the vehicle.

14. A skirt according to any preceding claim, further comprising a controller for controlling the actuation mechanism.

15. A vehicle (100) comprising a skirt (102) according to any preceding claim, wherein the upper surface (110) of the skirt is located on an underside (106) of the vehicle.

## Patentansprüche

1. Schürze (102) für eine Unterseite (106) eines Fahrzeugs (100), wobei die Schürze Folgendes umfasst:
eine Barriere (112), die dazu ausgelegt ist, sich von einer oberen Fläche (110) der Schürze aus nach unten zu erstrecken;
einen Randkörper (118), der an einem unteren Ende der Barriere angeordnet ist, wobei die Barriere dazu ausgelegt ist, eine Relativbewegung zwischen dem Randkörper und der oberen Fläche zu ermöglichen;
einen Betätigungsmechanismus (136a, 136b, 136c, 500) zum Steuern der Höhe des Randkörpers über einer Bodenfläche (114), auf der das Fahrzeug angeordnet ist, wobei der Betätigungsmechanismus Folgendes umfasst:
einen Aktuator (504), das dazu ausgelegt ist, eine Bewegung eines bewegbaren Elements (512) entlang einer ersten Achse (506) zu bewirken, wobei die erste Achse auf einer ersten Ebene liegt, die im Wesentlichen parallel zur oberen Fläche der Schürze ist; und
einen Umwandlungsmechanismus, der dazu ausgelegt ist, die Bewegung entlang der ersten Achse in eine Bewegung des Randkörpers entlang einer zweiten Achse (524) umzuwandeln, wobei die zweite Achse im Wesentlichen senkrecht zur ersten Ebene liegt, sodass sich die zweite Achse in Richtung der Bodenfläche erstreckt, wobei ein erstes Ende des Umwandlungsmechanismus mit dem bewegbaren Element verbunden ist und ein zweites Ende des Umwandlungsmechanismus mit dem Randkörper verbunden ist.

2. Schürze nach Anspruch 1, wobei der Betätigungsmechanismus ferner dazu ausgelegt ist, auf den Randkörper eine Kraft zu beaufschlagen, um den Randkörper in Richtung der Bodenfläche zu drücken; und gegebenenfalls
wobei der Aktuator betreibbar ist, um die auf den Randkörper beaufschlagte Kraft zu variieren.

3. Schürze nach Anspruch 2, wobei der Aktuator betreibbar ist, um die auf den Randkörper beaufschlagte Kraft auf eine aus einer ersten Kraft und einer zweiten Kraft einzustellen, wobei die erste Kraft größer ist als die zweite Kraft.

4. Schürze nach einem der vorangegangenen Ansprüche, wobei der Aktuator einen fluidgefüllten Aktuator umfasst; und gegebenenfalls
wobei der fluidgefüllte Aktuator ein pneumatischer Aktuator ist.

5. Schürze nach einem der vorangegangenen Ansprüche, wobei:
die Barriere dazu ausgelegt ist, zumindest teilweise eine Region (116) über der Bodenfläche zu definieren, auf welcher das Fahrzeug angeordnet ist; und
der Betätigungsmechanismus innerhalb der zumindest teilweise durch die Barriere definierten Region angeordnet ist.

6. Schürze nach einem der vorangegangenen Ansprüche, wobei:
die Barriere einen ersten Abschnitt, der auf einer ersten Seite einer Mittellinie (138) der Schürze angeordnet ist, und einen zweiten Abschnitt, der auf einer zweiten Seite der Mittellinie angeordnet ist, umfasst, wobei die Mittellinie eine Linie ist, die um eine Breite der oberen Fläche der Schürze zentriert ist; und
ein erster Abschnitt des Randkörpers an einem unteren Ende des ersten Abschnitts der Barriere angeordnet ist und ein zweiter Abschnitt des Randkörpers an einem unteren Ende des zweiten Abschnitts der Barriere angeordnet ist; und gegebenenfalls
wobei der Betätigungsmechanismus an der Mittellinie der Schürze angeordnet ist.

7. Schürze nach Anspruch 6, wobei der Randkörper einen Verbindungsabschnitt (140a, 140b, 140c) umfasst, der sich zwischen dem ersten Abschnitt des Randkörpers und dem zweiten Abschnitt des Randkörpers erstreckt, sodass der Verbindungsabschnitt die Mittellinie der Schürze kreuzt; und gegebenenfalls
wobei der Umwandungsmechanismus mit dem Verbindungsabschnitt des Randkörpers verbunden ist.

8. Schürze nach Anspruch 6 oder 7, wobei
der Betätigungsmechanismus zwei oder mehrere Betätigungsmechanismen umfasst, wobei jeder der zwei oder mehreren Betätigungsmechanismen einen entsprechenden Aktuator zum Bewirken einer entsprechenden Bewegung entlang der ersten Achse und ein entsprechendes, zwischen dem entsprechenden Aktuator und dem Randkörper verbundenes Umwandlungselement zum Umwandeln der entsprechenden Bewegung entlang der ersten Achse in eine entsprechende Bewegung des Randkörpers entlang der zweiten Achse umfasst; und
wobei die zwei oder mehreren Betätigungsmechanismen entlang der Mittellinie der Schürze beabstandet sind.

9. Schürze nach einem der vorangegangenen Ansprüche, wobei der Umwandlungsmechanismus einen Hebel (510) umfasst, der dazu ausgelegt ist, als Antwort auf die vom Aktuator bewirkten Bewegung entlang der ersten Achse relativ zur oberen Fläche der Schürze zu schwenken, und wobei der Randkörper mit dem Hebel verbunden ist, sodass das Schwenken des Hebels ein Bewegen des Randkörpers entlang der zweiten Achse bewirkt; und gegebenenfalls
wobei der Umwandlungsmechanismus ferner eine Stangenverbindung (514) umfasst, die zwischen einem ersten Schwenkgelenk (516) auf der oberen Fläche der Schürze und einem zweiten Schwenkgelenk (518) auf dem Hebel verbunden ist.

10. Schürze nach Anspruch 9, wobei:
der Umwandlungsmechanismus ferner eine Umkehrbewegungskopplung (602) umfasst, die dazu ausgelegt ist, als Antwort auf vom Aktuator bewirkte Bewegung eine Bewegung eines zweiten bewegbaren Elements (606) in eine Richtung entgegengesetzt zur Richtung der vom Aktuator bewirkten Bewegung des bewegbaren Elements zu bewirken; und
wobei das zweite bewegbare Element mit dem Hebel verbunden ist, sodass die Bewegung des zweiten bewegbaren Elements ein Schwenken des Hebels relativ zur oberen Fläche der Schürze bewirkt; und gegebenenfalls
wobei der Hebel benachbart zum Aktuator in einer Richtung normal zur ersten Achse montiert ist.

11. Schürze nach einem der vorangegangenen Ansprüche, wobei der Umwandlungsmechanismus über ein Schwenkgelenk (522) oder ein Gleitgelenk mit dem Randkörper verbunden ist; und gegebenenfalls
wobei das Schwenkgelenk ein Drehgelenk oder ein Kugelgelenk ist.

12. Schürze nach einem der vorangegangenen Ansprüche, ferner umfassend eine Basis (502), die auf der oberen Fläche der Schürze angeordnet ist, wobei der Aktuator und der Umwandlungsmechanismus auf der Basis montiert sind; und/oder
wobei der Aktuator zwei oder mehrere parallel montierte Aktuatoren umfasst.

13. Schürze nach einem der vorangegangenen Ansprüche, wobei der Betätigungsmechanismus dazu ausgelegt ist, den Randkörper zwischen einer ausgefahrenen Position, in welcher der Randkörper sich auf einer ersten Höhe über der Bodenfläche befindet, und einer verstauten Position, in welcher sich der Randkörper auf einer zweiten Höhe über der Bodenfläche befindet, zu bewegen, wobei die zweite Höhe größer ist als die erste Höhe; und/oder
wobei der Betätigungsmechanismus von einem Aufhängungssystem des Fahrzeugs unabhängig ist.

14. Schürze nach einem der vorangegangenen Ansprüche, ferner umfassend eine Steuerung zum Steuern des Betätigungsmechanismus.

15. Fahrzeug (100) umfassend eine Schürze (102) nach einem der vorangegangenen Ansprüche, wobei die obere Fläche (110) der Schürze auf einer Unterseite (106) des Fahrzeugs angeordnet ist.

## Revendications

1. Jupe (102) pour une face inférieure (106) d'un véhicule (100), la jupe comprenant :
une barrière (112) configurée pour s'étendre vers le bas à partir d'une surface supérieure (110) de la jupe ;
un rebord (118) disposé au niveau d'une extrémité inférieure de la barrière, dans laquelle la barrière est configurée pour permettre un déplacement relatif entre le rebord et la surface supérieure ;
un mécanisme d'actionnement (136a, 136b, 136c, 500) pour commander une hauteur du rebord au-dessus d'une surface de sol (114) sur laquelle le véhicule est disposé, dans laquelle le mécanisme d'actionnement comprend :
un actionneur (504) configuré pour provoquer un mouvement d'un élément mobile (512) le long d'un premier axe (506), le premier axe étant dans un premier plan qui est sensiblement parallèle à la surface supérieure de la jupe ; et
un mécanisme de conversion configuré pour convertir le mouvement le long du premier axe en un mouvement du rebord le long d'un second axe (524), le second axe étant sensiblement perpendiculaire au premier plan de telle sorte que le second axe s'étende vers la surface de sol, dans laquelle une première extrémité du mécanisme de conversion est connectée à l'élément mobile et une seconde extrémité du mécanisme de conversion est connectée au rebord.

2. Jupe selon la revendication 1, dans laquelle le mécanisme d'actionnement est en outre configuré pour appliquer une force au rebord afin de presser le rebord vers la surface de sol ; et facultativement
dans laquelle l'actionneur peut fonctionner pour faire varier la force appliquée au rebord.

3. Jupe selon la revendication 2, dans laquelle l'actionneur peut fonctionner pour régler la force appliquée au rebord à l'une d'une première force et d'une seconde force, dans laquelle la première force présente une amplitude supérieure à la seconde force.

4. Jupe selon l'une quelconque des revendications précédentes, dans laquelle l'actionneur comprend un actionneur rempli de fluide ; et facultativement
dans laquelle l'actionneur rempli de fluide est un actionneur pneumatique.

5. Jupe selon l'une quelconque des revendications précédentes, dans laquelle :
la barrière est configurée pour définir au moins en partie une région (116) au-dessus de la surface de sol sur laquelle le véhicule est disposé ; et
le mécanisme d'actionnement est disposé à l'intérieur de la région définie au moins en partie par la barrière.

6. Jupe selon l'une quelconque des revendications précédentes, dans laquelle :
la barrière comprend une première section disposée sur un premier côté d'un axe central (138) de la jupe, et une seconde section disposée sur un second côté de l'axe central, l'axe central étant une ligne qui est centrée sur une largeur de la surface supérieure de la jupe ; et
une première section du rebord est disposée au niveau d'une extrémité inférieure de la première section de la barrière, et une seconde section du rebord est disposée au niveau d'une extrémité inférieure de la seconde section de la barrière ; et facultativement
dans laquelle le mécanisme d'actionnement est situé au niveau de l'axe central de la jupe.

7. Jupe selon la revendication 6, dans laquelle le rebord comprend une partie de connexion (140a, 140b, 140c) qui s'étend entre la première section du rebord et la seconde section du rebord, de telle sorte que la partie de connexion croise l'axe central de la jupe ; et facultativement
dans laquelle le mécanisme de conversion est connecté à la partie de connexion du rebord.

8. Jupe selon la revendication 6 ou 7, dans laquelle :
le mécanisme d'actionnement comprend deux mécanismes d'actionnement ou plus, chacun des deux mécanismes d'actionnement ou plus comprenant un actionneur respectif pour provoquer un mouvement respectif le long du premier axe, et un mécanisme de conversion respectif connecté entre l'actionneur respectif et le rebord pour convertir le mouvement respectif le long du premier axe en un mouvement respectif du rebord le long du second axe ; et
les deux mécanismes d'actionnement ou plus sont espacés le long de l'axe central de la jupe.

9. Jupe selon l'une quelconque des revendications précédentes, dans laquelle le mécanisme de conversion comprend un levier (510) qui est configuré pour pivoter par rapport à la surface supérieure de la jupe en réponse au mouvement le long du premier axe provoqué par l'actionneur, et dans laquelle le rebord est connecté au levier de telle sorte que le pivotement du levier provoque un mouvement du rebord le long du second axe ; et facultativement
dans laquelle le mécanisme de conversion comprend en outre une bielle (514) qui est connectée entre une première articulation de pivot (516) sur la surface supérieure de la jupe, et une seconde articulation de pivot (518) sur le levier.

10. Jupe selon la revendication 9, dans laquelle :
le mécanisme de conversion comprend en outre une bielle de mouvement inverse (602) configurée pour, en réponse au mouvement provoqué par l'actionneur, provoquer un mouvement d'un second élément mobile (606) dans une direction opposée à une direction du mouvement de l'élément mobile provoqué par l'actionneur ; et
le second élément mobile est connecté au levier, de telle sorte que le mouvement du second élément mobile amène le levier à pivoter par rapport à la surface supérieure de la jupe ; et facultativement
dans laquelle le levier est monté adjacent à l'actionneur dans une direction normale au premier axe.

11. Jupe selon l'une quelconque des revendications précédentes, dans laquelle le mécanisme de conversion est connecté au rebord via une articulation de pivot (522) et/ou une articulation coulissante ; et facultativement
dans laquelle l'articulation de pivot est une articulation de révolution ou une articulation sphérique.

12. Jupe selon l'une quelconque des revendications précédentes, comprenant en outre une base (502) disposée sur la surface supérieure de la jupe, dans laquelle l'actionneur et le mécanisme de conversion sont montés sur la base ; et/ou
dans laquelle l'actionneur comprend deux actionneurs ou plus montés en parallèle.

13. Jupe selon l'une quelconque des revendications précédentes, dans laquelle le mécanisme d'actionnement est configuré pour déplacer le rebord entre une position déployée dans laquelle le rebord est à une première hauteur au-dessus de la surface de sol, et une position rangée dans laquelle le rebord est à une seconde hauteur au-dessus de la surface de sol, la seconde hauteur étant supérieure à la première hauteur ; et/ou
dans laquelle le mécanisme d'actionnement est indépendant d'un système de suspension du véhicule.

14. Jupe selon l'une quelconque des revendications précédentes, comprenant en outre un dispositif de commande pour commander le mécanisme d'actionnement.

15. Véhicule (100) comprenant une jupe (102) selon l'une quelconque des revendications précédentes, dans lequel la surface supérieure (110) de la jupe est située sur une face inférieure (106) du véhicule.
